# EUROPEAN PATENT APPLICATION

(11) **EP 2 224 367 A1**
(43) Date of publication of application: **01.09.2010**
(21) Application number: 10150535.2
(22) Date of filing: 12.01.2010
(51) Int. Cl.: G06F 21/00

(54) **Content management apparatus**

(30) Priority: 25.02.2009 JP 2009042744
(71) Applicant: FUJITSU LIMITED, Kawasaki-shi, Kanagawa 211-8588 (JP)
(72) Inventor: Fujimoto, Shingo, Kawasaki-shi, Kanagawa 211-8588 (JP); Matsui, Kazuki, Kawasaki-shi, Kanagawa 211-8588 (JP)
(74) Representative: Stebbing, Timothy Charles

(57) **Abstract**

A content management system (100) which carries out a process for allowing content data for reproducing content to be used in a second communication terminal (2000) in place of a first communication terminal (1000), includes an authentication unit (3400) that authenticates that the second communication terminal (2000) is a takeover terminal which is a communication terminal which takes over rights to use the content from the first communication terminal (1000) and a rights information transmission unit (3300) that, in the event that it is authenticated that the second communication terminal (2000) is the takeover terminal, transmits second rights information which is necessary in order to use the content data, and which is valid only for the second communication terminal, to the second communication terminal (2000).

## Description

The present invention described herein relates to a technology which protects copyright of digital content.

As copyright exists for many items of digital content such as music or video, it is basically prohibited to duplicate them without the permission of the copyright holder.

Also, as digital content is made up of digital data, duplication is easy. Therefore, the digital content is protected by Digital Rights Management (DRM) technology, which applies a restriction to the distribution and reproduction of the digital content.

Also, in recent years, the multi-functionalization of a portable terminal such as a mobile telephone is advancing and, as well as the original verbal communication function, and the like, the reproduction of music, video, and the like, has become possible. As copyright also exists for these items of digital content such as music and video, they are protected by Open Mobile Alliance (OMA) DRM, which is DRM technology for a mobile terminal.

Digital content which is protected by DRM technology is restricted from being transferred ( moved) outside a device.

A user who uses this kind of digital content is inconvenienced in the event of acquiring a new reproduction device in that, it not being possible to shift the digital content from the old device to the new device, it is not possible to reproduce the digital content in the new device.

Therein, there is a technology which, only in the case of transferring to a new device, enables a transfer of digital content from the old device to the new device by saving the digital content at a backup server, and restoring it from the backup server to the new device (for example, refer to Japanese Laid-open Patent Publication No. 2006-318134).

According to this technology, even assuming that the device is changed by replacing it with a new model, or the like, the digital content reproduced in the old device can be reproduced in the new device, which is particularly convenient with a mobile telephone, or the like, of which a device change is carried out frequently.

However, with this technology, digital content protected by the DRM technology, which enables a reproduction only in a specific device, cannot be reproduced even assuming that it is transferred to a new device. This is because the new device is not the specific device.

It is desirable to provide a content management system which, in the event that digital content which can only be used in a specific device is transferred to a new device, enables the digital content to continue to be used in the new device.

According to one aspect of the present invention there is provided a content management system which carries out a process for allowing content data for reproducing content to be used in a second communication terminal in place of a first communication terminal, the content management system comprising: an authentication unit that authenticates that the second communication terminal is a takeover terminal which is a communication terminal which takes over rights to use the content from the first communication terminal; and a rights information transmission unit that, in the event that it is authenticated that the second communication terminal is the takeover terminal, transmits second rights information which is necessary in order to use the content data, and which is valid only for the second communication terminal, to the second communication terminal.

Features and advantages of the various embodiments will be realized and attained by means of the elements and combinations particularly pointed out in the claims.

It is to be understood that both the foregoing general description and the following detailed description are exemplary and explanatory and are not restrictive of the various embodiments, as claimed.
Reference is made, by way of example only, to the accompanying drawings in which:

Fig. 1 illustrates an example of an overall configuration of a content management system 100;
Fig. 2 illustrates a content data and rights data distribution example;
Fig. 3 illustrates an example of a transfer of the content data and rights data;
Fig. 4 illustrates an example of a functional configuration of the content management system;
Fig. 5A illustrates an example of a configuration and details of terminal management data 4110;
Fig. 5B illustrates an example of a configuration and details of terminal change data 4120;
Fig. 6 illustrates an example of a configuration and details of saved data 4210;
Fig. 7 illustrates an example of a configuration and details of content management data 5110;
Fig. 8A illustrates an example of a configuration and details of license management data 3110;
Fig. 8B illustrates an example of a configuration and details of content key management data 3120;
Fig. 9 is a diagram illustrating an example of a configuration and details of content management data 1110;
Fig. 10 is a diagram illustrating an example of a configuration and details of a rights data group 1210;
Fig. 11A illustrates an example of a configuration and details of terminal specific data 1310 of a portable terminal 1000;
Fig. 11B illustrates an example of a configuration and details of terminal specific data 2310 of a portable terminal 2000;
Fig. 12A illustrates an example of items and details of rights issue request data 1610;
Fig. 12B illustrates an example of items and details of rights data 3210;
Fig. 13A illustrates an example of items and details of transfer certification issue request data 2410;
Fig. 13B illustrates an example of items and details of transfer certification data 4310;
Fig. 14A illustrates an example of items and details of rights reissue request data 2510;
Fig. 14B illustrates an example of items and details of reissued rights data 3310;
Fig. 15 is a diagram illustrating an XML data example of the rights reissue request data;
Fig. 16 is a diagram illustrating an XML data example of the rights data;
Fig. 17 is a flowchart of a terminal change process;
Fig. 18 is a flowchart of a content data and rights data acquisition process, and a regular backup process;
Fig. 19 is a flowchart of a content management data and rights data saving and discarding process;
Fig. 20 is a flowchart of a content management data and rights data restoration process;
Fig. 21 is a flowchart of a transfer certification acquisition process;
Fig. 22 is a flowchart of a rights reacquisition process;
Fig. 23 is a block diagram illustrating an example of a functional configuration of a content management system of an embodiment 2;
Fig. 24 is a flowchart of a content management data and rights data saving and discarding process of the embodiment 2;
Fig. 25 is a diagram illustrating an example of an overall configuration of a content management system 200 of an embodiment 3;
Fig. 26 is a block diagram illustrating an example of a functional configuration of the content management system of the embodiment 3;
Fig. 27 is a diagram illustrating an example of a configuration and details of terminal management data 6110 of the embodiment 3;
Fig. 28 is a flowchart of a terminal change process of the embodiment 3;
Fig. 29 is a flowchart of a transfer certification acquisition process of the embodiment 3;
Fig. 30 is a block diagram illustrating an example of a functional configuration of a content management system of an embodiment 4;
Fig. 31 is a diagram illustrating an example of a configuration and details of terminal management data 7110;
Fig. 32 is a flowchart of a content management data and rights data saving and discarding process of the embodiment 4;
Fig. 33 is a flowchart of a transfer certification acquisition process of the embodiment 4; and
Fig. 34 is a flowchart of a rights reacquisition process of the embodiment 4.

### Embodiment 1

A content management system of an embodiment 1 applies to a DRM technology of a method of separately distributing content data (for example, audio/video data of a format such as Moving Picture Experts Group-4 (MPEG-4), Real Media, or Quick Time), which are digital data configuring digital content (hereafter called "content"), and rights data, which are data relating to a right to use the content.

The method, rather than being a method which attempts to restrict a duplication of content by forbidding its movement outside a device, is a method which permits a duplication of content but, by making rights necessary for using the content only valid for the specific device, restricts a reproduction in another device.

Specifically, for the content data being encrypted, there is a decryption key for decrypting the encrypted content data in the content rights data. Because this rights data can be decrypted with the key which is owned by the specific device, the specific device only can decrypt the rights data, and can use the content data..

A user acquires the rights data by requesting a so-called license issuer to issue them. The content management system of embodiment 1 is one which has rights data which have been held by a certain device (hereafter called an "old device") reissued to another device (hereafter called a "new device").

When reissuing, there is a condition that the rights which the old device has held can no longer be used. This is in order that the content cannot be used in the old device as well as in the new device.

Also, the reissued rights data takes over a condition of use of the content in the old device. For example, in the event that a condition of use included in the rights data held by the old device is "reproducible ten times", and a device replacement is carried out after reproducing three times, the condition of use included in the rights data which the new device acquires via the reissue is "reproducible seven times". This is because, as far as the license issuer is concerned, only the device which can use the rights having changed, the rights can be said to be the same. Also, as far as the user is concerned, there being no need to purchase the rights again, or the like, there is an increase in convenience.

Hereafter, a description will be given, using the drawings, of the content management system in embodiments of the invention. In the embodiment 1, a description will be given, using a portable terminal such as a mobile telephone as the heretofore described device, of a case in which a change of the portable terminal is carried out.

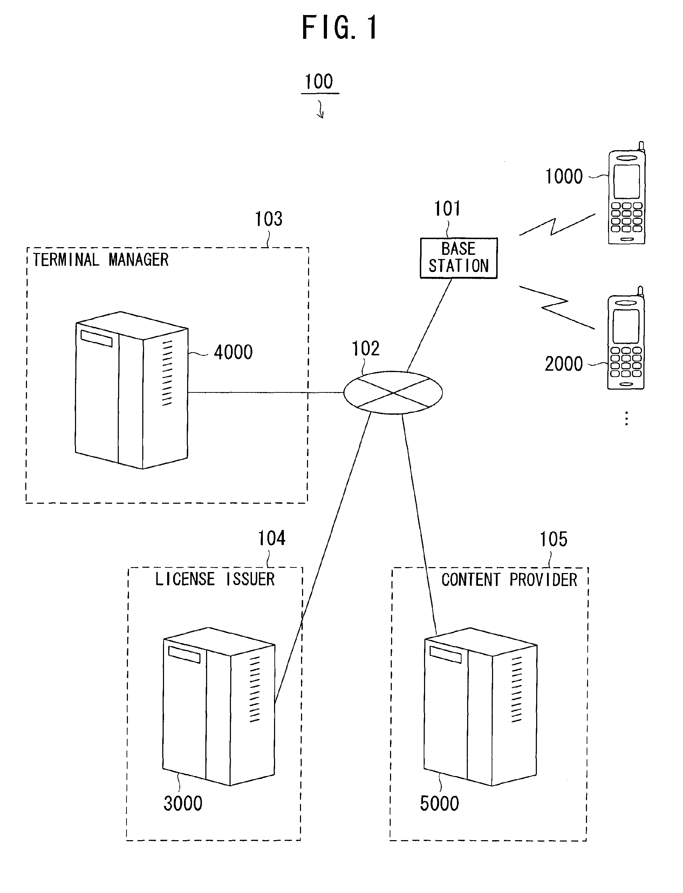

Fig. 1 is a diagram illustrating an example of an overall configuration of a content management system 100.

The content management system 100 includes portable terminals (1000 and 2000), a terminal management server 4000, a license management server 3000, and a content management server 5000, which can communicate with each other via a base station 101 and network 102.

In the embodiment 1, it is assumed that a terminal manager 103, which is a carrier of mobile telephones or the like, operates the terminal management server 4000, a content provider 105 operates the content management server 5000, and a license issuer 104 operates the license management server 3000.

Also, in the embodiment 1, a case is assumed wherein a user of the portable terminal 1000 carries out a change of device from the portable terminal 1000 to the portable terminal 2000. The portable terminal 1000 and portable terminal 2000 are used under the management of the same terminal manager 103, for example by both being provided under contract to the same content provider or telephone company. It is assumed that the portable terminal 1000 has already acquired content data of content from the content provider 105, and has already acquired rights data thereof from the license issuer 104.

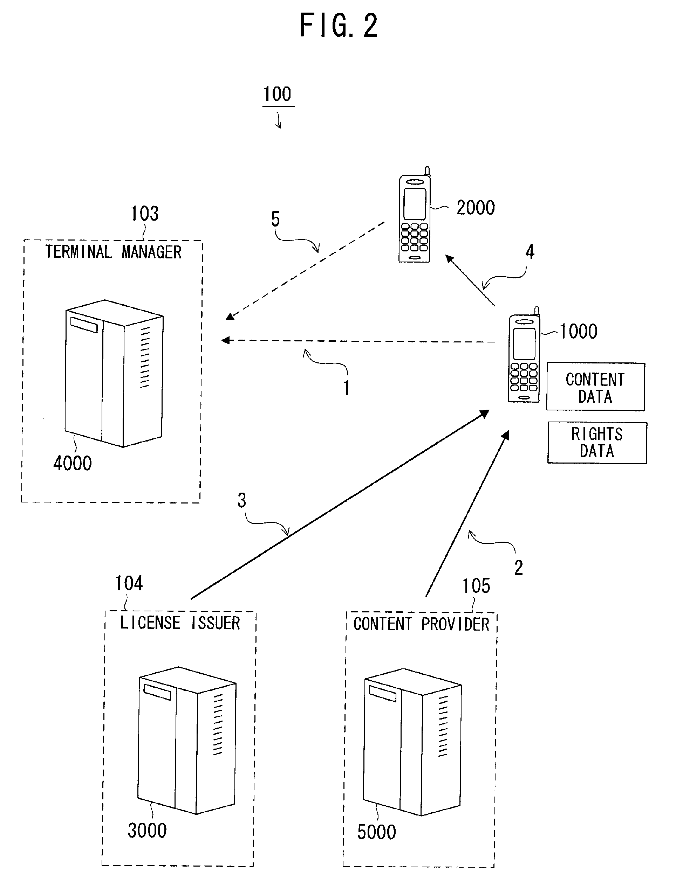

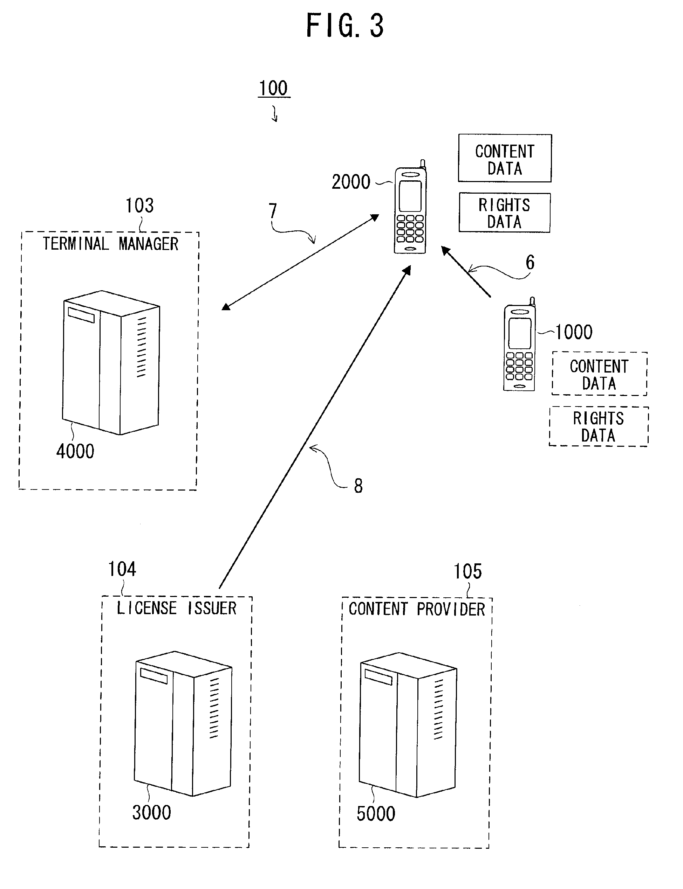

Herein, using Fig. 2, a simple description will be given of a flow of a process when the user acquires the content data and rights data for the portable terminal 1000, and subsequently replaces the portable terminal 1000 with the portable terminal 2000. Furthermore, using Fig. 3, a simple description will be given of a flow of a process when the portable terminal 2000 receives a reissuing of the rights.

The user is using the portable terminal 1000 managed by the terminal manager 103 (Fig. 2: dashed arrow 1).

Firstly, the user obtains desired content from the content provider 105 (Fig. 2: solid arrow 2). At this time, encrypted content data of the content are downloaded into the portable terminal 1000.

Next, the user purchases the rights for the purchased content from the license issuer 104 (Fig. 2: solid arrow 3). Purchasing the rights actually means acquiring rights data indicating details of the purchased rights.

Then, the user decrypts the encrypted content data with a decryption key included in the rights data of the purchased rights, and uses the content.

The user changes device from the portable terminal 1000 to the portable terminal 2000 managed by the same terminal manager 103 as the portable terminal 1000 (Fig. 2: solid arrow 4, dashed arrow 5).

The user causes the content data and rights data which have been used in the portable terminal 1000 to be transferred to the portable terminal 2000 (Fig. 3: solid arrow 6). In the embodiment 1, this transfer is carried out via the terminal manager 103, but herein, for convenience of description, it is represented by the solid arrow 6. Also, the dashed rectangles to the right of the portable terminal 1000 indicate the content data and rights data which have moved to the portable terminal 2000. Hereafter, "transfer" is taken to mean moving to another portable terminal, leaving no content data or rights data in the portable terminal.

Next, the portable terminal 2000 acquires transfer certification, which is certification that the content data and rights data have been transferred from the portable terminal 1000 to the portable terminal 2000, from the terminal manager 103 (Fig. 3: solid arrow 7).

Next, the portable terminal 2000, accompanied by the transfer certification, requests the license issuer 104 to reissue the rights data, and receives a reissue of the rights data (Fig. 3: solid arrow 8).

Now, the user of the portable terminal 2000 can use the content previously used in the portable terminal 1000.

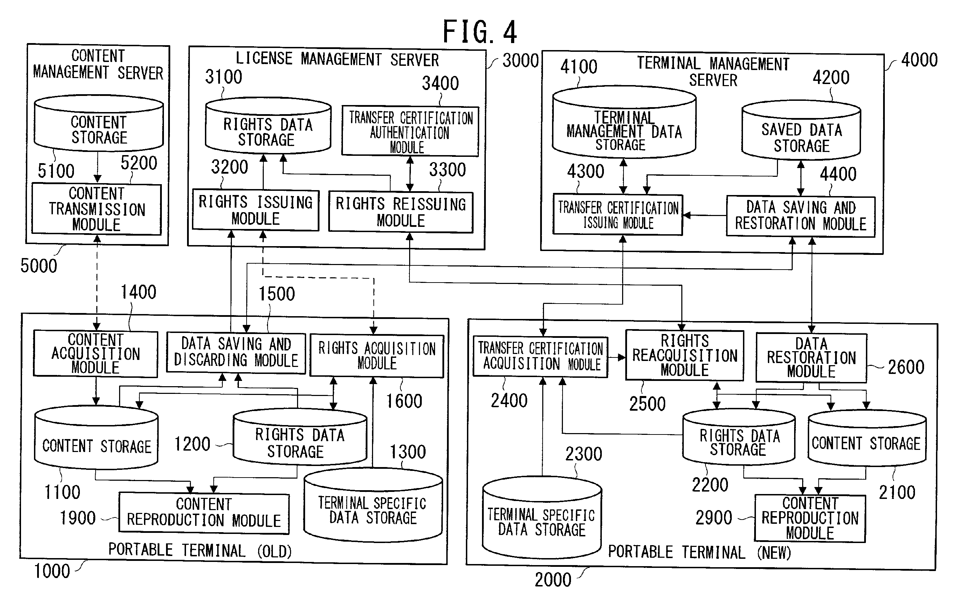

Hereafter, using Fig. 4, a description will be given of the portable terminals (1000 and 2000) configuring the content management system 100.

Fig. 4 is a block diagram illustrating an example of a functional configuration of the portable terminals (1000 and 2000), terminal management server 4000, license management server 3000, and content management server 5000.

The dashed arrows indicate a flow of data when the portable terminal 1000 acquires the content data and rights data, while the solid arrows indicate a flow of data when the portable terminal 2000 acquires the content data and rights data in the event that the device is changed from the portable terminal 1000 to the portable terminal 2000.

Firstly, the portable terminal 1000 and the portable terminal 2000 include, in addition to functions which a portable terminal such as a mobile telephone normally has, functions peculiar to the content management system of the embodiment 1, for example, a function which requests a reissue of rights information, and the like. Fig. 4 mainly depicts functional modules which carry out functions peculiar to the content management system of the embodiment 1.

Also, as the device is changed from the portable terminal 1000 to the portable terminal 2000, with the portable terminal 1000, the description will be centered on functional modules necessary in order to operate as the old terminal, while with the portable terminal 2000, the description will be centered on functional modules necessary in order to operate as the new terminal. It is acceptable that each portable terminal has both the functional modules necessary in order to operate as the new terminal, and the functional modules necessary in order to operate as the old terminal.

The portable terminal 1000 has a content storage 1100, a rights data storage 1200, a terminal specific data storage 1300, a content acquisition module 1400, a data saving and discarding module 1500, a rights acquisition module 1600, and a content reproduction module 1900, as the functional modules necessary in order to operate as the old terminal.

The content storage 1100 has a function of storing content management data. The content management data include content data, and management data such as information for acquiring content rights data. The content data are stored encrypted.

The rights data storage 1200 has a function of storing rights data which enable content to be used. In the embodiment 1, it is assumed that one item of rights data is stored for one item of content data. The rights data including a decryption key for decrypting the encrypted content data, the decryption key is encrypted with a public key owned by the portable terminal 1000.

Also, the terminal specific data storage 1300 has a function of storing information unique to the portable terminal 1000, for example, information such as a telephone number for identifying the terminal. In principle, information stored here is not changed.

The data stored in each of the content storage 1100, rights data storage 1200, and terminal specific data storage 1300 will be described, using the drawings, in a subsequent "Data" section.

Next, the content acquisition module 1400 has a function of receiving a content specification from the user, receiving the content data and management data of the specified content from the content management server 5000, and storing them in the content storage 1100.

The data saving and discarding module 1500 has two functions. One is a function of causing the data stored in the content storage 1100 and rights data storage 1200 to be saved in the terminal management server 4000, in accordance with an instruction from the terminal management server 4000. The other is a function of discarding the rights data stored in the rights data storage 1200, in accordance with an instruction from the terminal management server 4000.

The rights acquisition module 1600 has a function of receiving an instruction from the user to acquire content rights data, acquiring the rights data from the license management server 3000, and storing the acquired rights data in the rights data storage 1200. Specifically, the rights acquisition module 1600 transmits data requesting the rights to the license management server 3000, and receives the rights data. The data requesting the rights, and the rights data received, will be described, using the drawings, in the subsequent "Data" section.

The content reproduction module 1900 has a function of receiving a content specification from the user, and reproducing the specified content. Specifically, the content reproduction module 1900 retrieves and decrypts content data stored in the content storage 1100, then reproduces them. The decryption of the content data is carried out using the decryption key included in the rights data stored in the rights data storage 1200. As the decryption key is encrypted with the public key of the portable terminal 1000, it is used after being decrypted with a secret key stored in the terminal specific data storage 1300.

Next, the portable terminal 2000 has a content storage 2100, a rights data storage 2200, a terminal specific data storage 2300, a transfer certification acquisition module 2400, a rights reacquisition module 2500, a data restoration module 2600, and a content reproduction module 2900, as the functional modules necessary in order to operate as the new terminal.

The content storage 2100 and rights data storage 2200 have respectively the same functions as the content storage 1100 and rights data storage 1200 of the portable terminal 1000. That is, the content storage 2100 stores content management data, while the rights data storage 2200 stores rights data.

Also, the terminal specific data storage 2300, having the same function as the terminal specific data storage 1300 of the portable terminal 1000, stores information unique to the portable terminal 2000.

The content reproduction module 2900 has the same function as the content reproduction module 1900 of the portable terminal 1000. That is, it receives a content specification from the user, and reproduces the specified content.

Next, the transfer certification acquisition module 2400 has a function of requesting transfer certification from the terminal management server 4000, and acquiring transfer certification data. The transfer certification data are data proving that the portable terminal 2000 is the terminal to which the portable terminal 1000 has been changed.

The transfer certification data are used when the portable terminal 2000 requests the license management server 3000 to reissue the rights data. This is, for example, to prevent a portable terminal other than the portable terminal 2000 from masquerading as the portable terminal 2000, and acquiring the rights data.

The transfer certification acquisition module 2400, specifically, transmits data requesting the transfer certification to the terminal management server 4000, and receives the transfer certification data. The data requesting the transfer certification, and the transfer certification data received, will be described, using the drawings, in the subsequent "Data" section.

The rights reacquisition module 2500 has a function of acquiring rights data from the license management server 3000. Although the rights reacquisition module 2500 has basically the same function as the rights acquisition module 1600 of the portable terminal 1000, it differs in that it requests a reissue of data equivalent to rights data which the license management server 3000 has issued in the past. The data requesting rights again, and the rights data received, will be described, using the drawings, in the subsequent "Data" section.

The data restoration module 2600 has a function of restoring content management data and rights data which have been stored in the portable terminal 1000. Specifically, the data restoration module 2600 acquires from the terminal management server 4000 the content management data and rights data which the terminal management server 4000 has saved at an appropriate time from the portable terminal 1000, and stores them in the content storage 2100 and rights data storage 2200 respectively.

Next, the terminal management server 4000 has a terminal management data storage 4100, a saved data storage 4200, a transfer certification issuing module 4300, and a data saving and restoration module 4400.

The terminal management data storage 4100 has a function of storing terminal management data which manage the portable terminal, and terminal change data which manage information which, in the event of changing the device, distinguishes between the portable terminals before and after the change.

The saved data storage 4200 has a function of storing, as so-called backup data, content data and rights data stored by a portable terminal managed by the terminal management server 4000. The saved data storage 4200 receives the content management data and rights data from the portable terminal regularly, or when the user issues a backup command by operating the portable terminal, or the like, and stores them correlated with data identifying the portable terminal.

The data stored in the terminal management data storage 4100 and saved data storage 4200 will be described, using the drawings, in the subsequent "Data" section.

The transfer certification issuing module 4300 has a function of generating transfer certification data in response to a request from the portable terminal 2000, and transmitting the generated transfer certification data to the portable terminal 2000. The transfer certification data are data proving that the portable terminal used by the user has been changed from the portable terminal 1000 to the portable terminal 2000.

The data saving and restoration module 4400 has a function of receiving content management data and rights data from the portable terminal 1000 regularly, or when necessary, and causing them to be stored in the saved data storage 4200. Also, the data saving and restoration module 4400 has a function of transmitting the saved content, and the like, and rights data to the portable terminal 2000.

Next, the license management server 3000 has a rights data storage 3100, a rights issuing module 3200, a rights reissuing module 3300, and a transfer certification authentication module 3400.

The rights data storage 3100 has a function of storing rights data issued by the license management server 3000. The data stored in the rights data storage 3100 will be described, using the drawings, in the subsequent "Data" section.

The rights issuing module 3200 has a function of generating rights data in response to a request from the portable terminal 1000, and transmitting the generated rights data to the portable terminal 1000. Also, the rights issuing module 3200 has a function of registering the fact that the rights data are in the process of being transferred at the request of the portable terminal 1000.

Also, the rights reissuing module 3300 has a function of issuing rights data in response to a request for a reissue from the portable terminal 2000. The portable terminal 2000, when carrying out the request for a reissue, transmits transfer certification data 82 to the license management server 3000.

The transfer certification authentication module 3400 has a function of, in the event that there is a request from the portable terminal 2000 for a reissue of rights, carrying out an authentication of the transmitted transfer certification data.

Next, the content management server 5000 has a content storage 5100, and a content transmission module 5200.

The content storage 5100 has a function of storing content data, and a key which encrypts the content data, and the like. The content data stored in the content storage 5100, being content data of content provided by the content provider 105, is encrypted. Also, it is assumed that the key which encrypts the content data differs for each item of content.

The data stored in the content storage 5100 will be described, using the drawings, in the subsequent "Data" section.

The content transmission module 5200 has a function of transmitting content data of desired content in response to a request from the portable terminal 1000.

All, or one portion, of the heretofore described functions are realized by a CPU, which each portable terminal and the like has, executing a program stored in a memory, or the like.

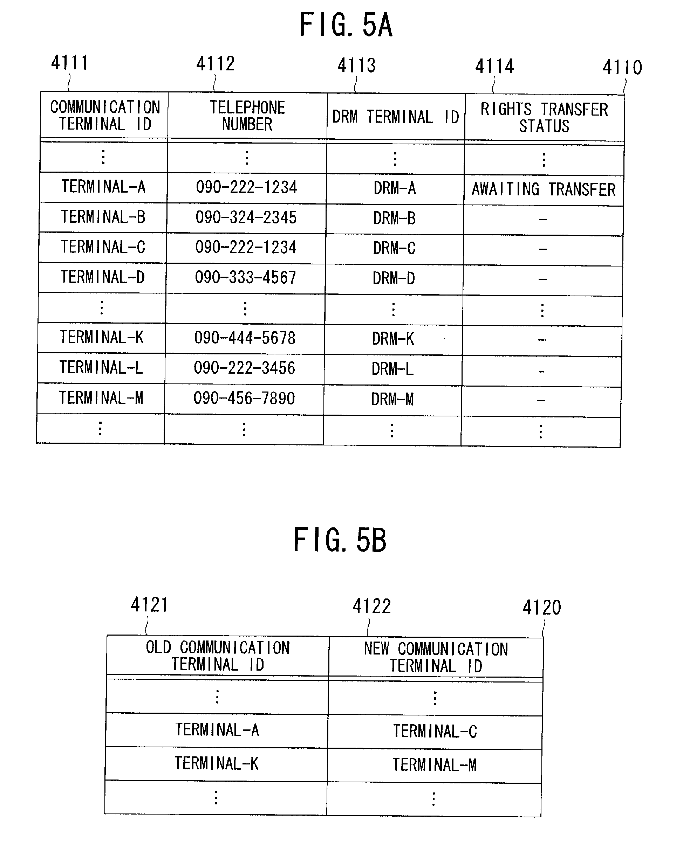

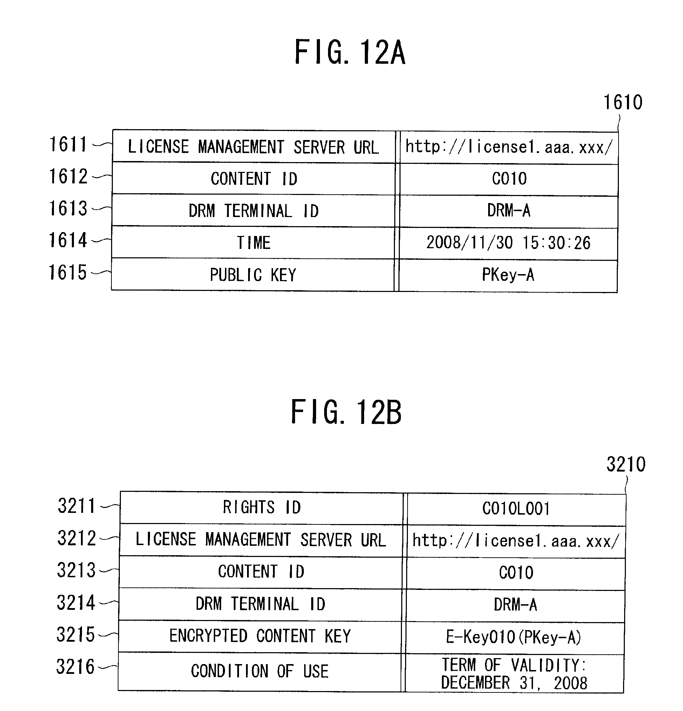

Hereafter, a description will be given, using Figs. 5A to 16, of the main data used by the content management system 100 of the embodiment 1. Figs. 5A to 11 are the data stored in the storages, while Figs. 12A to 16 are the data transmitted and received when requesting rights, or the like.

Figs. 5A and 5B are diagrams illustrating the data stored in the terminal management data storage 4100 of the terminal management server 4000. Fig. 5A is a diagram illustrating an example of a configuration and details of terminal management data 4110, while Fig. 5B is a diagram illustrating an example of a configuration and details of terminal change data 4120.

Firstly, a description will be given of the terminal management data 4110 of Fig. 5A. The terminal management data 4110 include communication terminal ID 4111, a telephone number 4112, DRM terminal ID 4113, and a rights transfer status 4114. One record of the heretofore described configuration is registered per portable terminal in the terminal management data 4110 for all the portable terminals managed by the terminal management server 4000. Also, on a process of starting the use of a portable terminal being implemented at the terminal manager 103, one record is added to the terminal management data 4110.

The communication terminal ID 4111 1 is an identifier which identifies a portable terminal acting as a communication device, while the telephone number 4112 is a so-called mobile telephone number.

The DRM terminal ID 4113 is an identifier which identifies a DRM protection system. The DRM protection system acquires content data and rights data, and manages a content usage, for example, a number of reproductions. Consequently, it can be said that the content data and rights data are given to the DRM protection system indicated by the DRM terminal ID 4113.

A DRM protection system with a differing identifier is implemented by each portable terminal. Consequently, the DRM terminal ID 4113 also has a function as an identifier which identifies a portable terminal. Hereafter, a portable terminal implementing a DRM protection system indicated by the DRM terminal ID 4113 will also be called a "portable terminal indicated by the DRM terminal ID 4113".

The rights transfer status 4114 indicates whether or not a portable terminal indicated by the DRM terminal ID 4113 is in the middle of carrying out a process of transferring rights data.

Specifically, in the event that the rights transfer status 4114 is "Awaiting transfer", the portable terminal indicated by the corresponding DRM terminal ID 4113, being the old device which has been changed, is in a condition in which it has already deleted the rights data it had stored. Also, this indicates that the terminal management server 4000 is in a condition in which it is waiting for a request for transfer certification from the new portable terminal.

Meanwhile, in the event that the rights transfer status 4114 is "-", this indicates that the portable terminal indicated by the corresponding DRM terminal ID 4113 has not been changed, and is in a condition in which it is not carrying out the process of transferring the rights data granted.

For example, the portable terminal indicated by the communication terminal ID 4111 "Terminal-D", the rights transfer status 4114 being "-", has not been changed, and is not carrying out the process of transferring the rights data.

Next, a description will be given of the terminal change data 4120 of Fig. 5B.

The terminal change data 4120 are such that, in the event that a portable terminal is changed, the communication terminal ID of the portable terminals before and after the change are stored correlated.

With the content management system 100 of the embodiment 1, in the event that there is a change of portable terminal due to a repurchase, or the like, this will be registered in the terminal change data 4120.

The terminal change data 4120 include old communication terminal ID 4121, and new communication terminal ID 4122. Also, one record of the heretofore described configuration is added to the terminal change data 4120 for every change of portable terminal.

The old communication terminal ID 4121, in the event that the portable terminal is changed, is an identifier of the portable terminal before the change, while the new communication terminal ID 4122 is an identifier of the portable terminal after the change. In the event that the identifiers registered in the old communication terminal ID 4121 and new communication terminal ID 4122, and the identifier registered with the communication terminal ID 4111 of the terminal management data 4110, indicate the same portable terminal, the same identifier is registered.

For example, as the old communication terminal ID 4121 is "Terminal-A", and the new communication terminal ID 4122 is "Terminal-C", there has been a change from the portable terminal indicated when the communication terminal ID 4111 of the terminal management data 4110 is "Terminal-A" to the portable terminal indicated when the communication terminal ID 4111 is "Terminal-C".

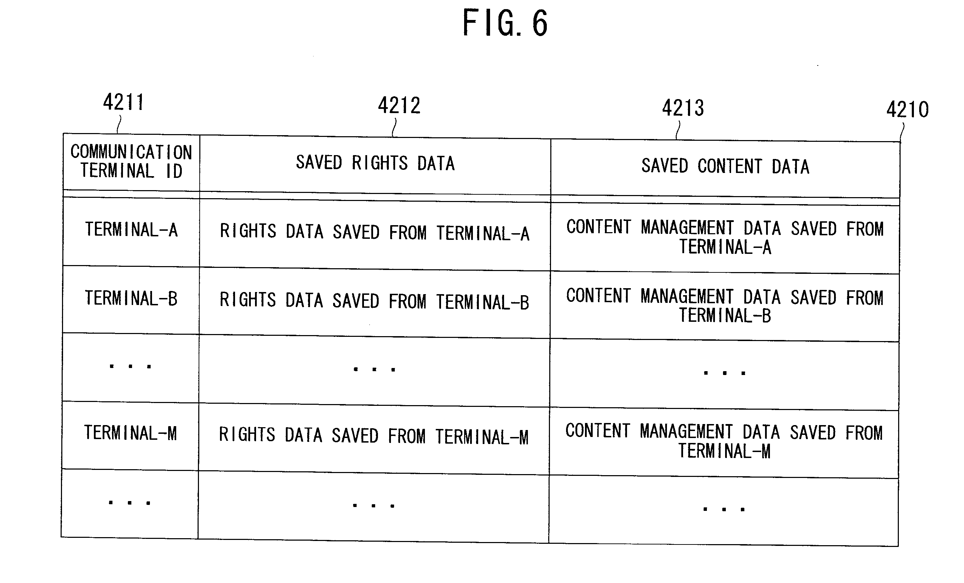

Next, Fig. 6 is a diagram illustrating an example of a configuration and details of saved data 4210.

The saved data 4210 are data stored in the saved data storage 4200 of the terminal management server 4000.

The saved data 4210 are configured of communication terminal ID 4211, saved rights data 4212, and saved content data 4213. Rights data and content management data saved from a portable terminal are stored, correlated with an identifier of the portable terminal, in the saved data 4210.

The communication terminal ID 4211 is an identifier of a communication terminal.

The saved rights data 4212 are backup data of the rights data stored in the rights data storage of a portable terminal indicated by the communication terminal ID 4211, while the saved content data 4213 are backup data of the content management data stored in the content storage.

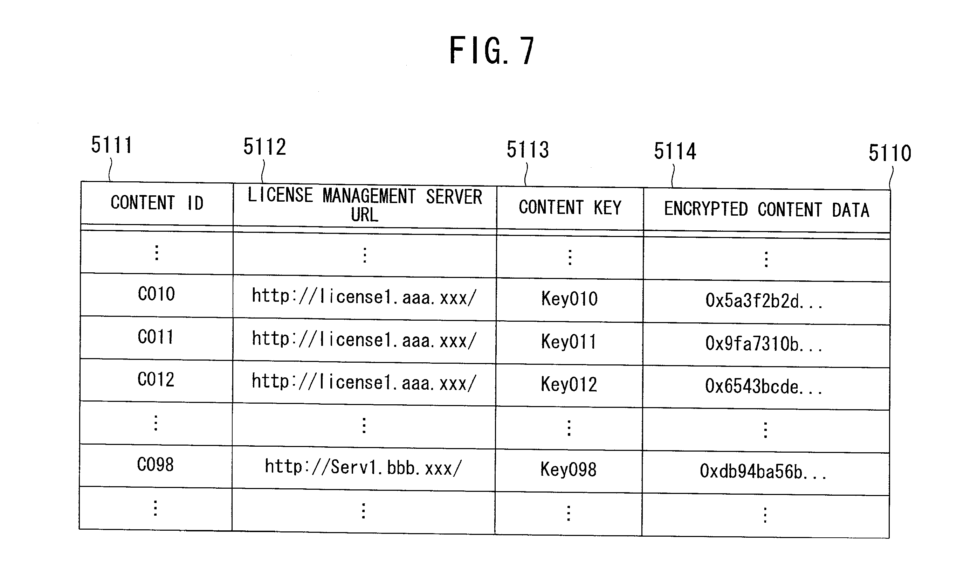

Fig. 7 is a diagram illustrating an example of a configuration and details of content management data 5110.

The content management data 5110 are data stored in the content storage 5100 of the content management server 5000.

The content management data 5110 include content ID 5111, a license management server URL 5112, a content key 5113, and encrypted content data 5114. One record of the heretofore described configuration is registered per item of content in the content management data 5110 for all the items of content provided by the content management server 5000.

The content ID 5111 is an identifier for identifying content.

The license management server URL 5112 being a URL of a license management server of a license issuer who issues content rights data, the portable terminal 1000 acquires rights data by accessing the URL. The license management server URL 5112, should also be called an, as it were, identifier of the license issuer.

The content key 5113 is a key for encrypting content, while the encrypted content data 5114 is encrypted content data.

The content transmission module 5200 of the content management server 5000, on content being requested by a portable terminal, transmits one set of the content ID 5111, rights data management server URL 5112, and encrypted content data 5114 of the content to the portable terminal.

For example, in the event that the portable terminal 1000 requests the content indicated by the content ID 5111 "C010", the content transmission module 5200 of the content management server 5000 transmits content ID 5111 "C010", a rights data management server URL 5112 "http://licensel.aaa.xxx/", and encrypted content data 5114 "0x5a3f2b2d..." as one set to the portable terminal 1000.

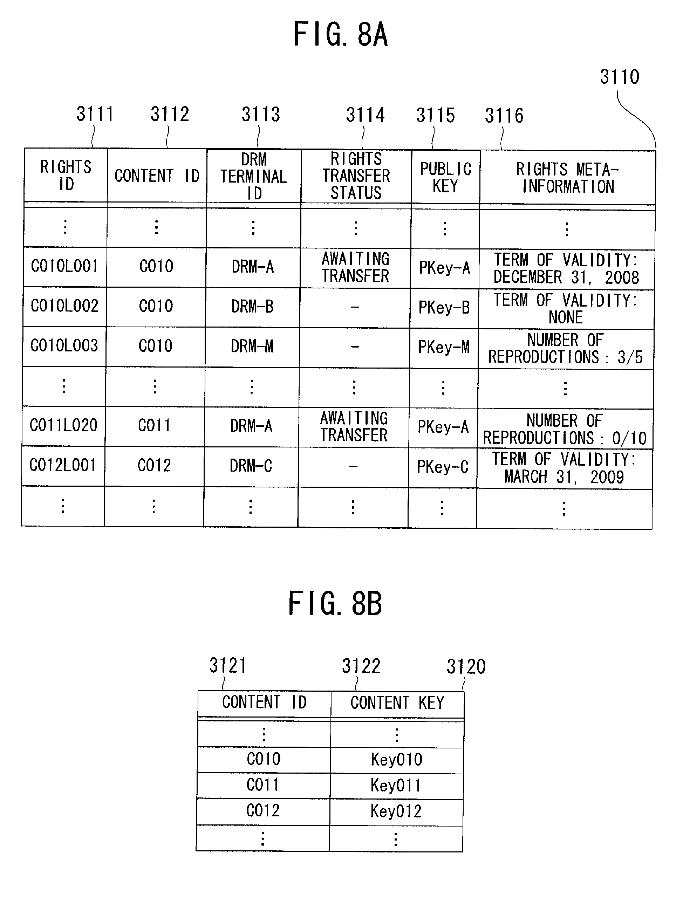

Next, Figs. 8A and 8B are diagrams illustrating data stored in the rights data storage 3100 of the license management server 3000. Fig. 8A is a diagram illustrating an example of a configuration and details of license management data 3110, while Fig. 8B is a diagram illustrating an example of a configuration and details of content key management data 3120.

Firstly, a description will be given of the license management data 3110 of Fig. 8A.

The license management data 3110 include rights ID 3111, content ID 3112, DRM terminal ID 3113, a rights transfer status 3114, a public key 3115, and rights meta-information 3116. One record of the heretofore described configuration is registered per item of rights data in the license management data 3110 for all the items of rights data issued by the license management server 3000.

The rights ID 3111 is an identifier which identifies rights.

Also, the content ID 3112 is an identifier for identifying content.

The DRM terminal ID 3113 is an identifier which identifies a DRM protection system. It is an ID of a DRM protection system of a portable terminal to which are granted the rights indicated by the rights ID 3111.

The rights transfer status 3114 indicates whether or not a portable terminal to which are granted the rights data indicated by the rights ID 3111 is in the middle of carrying out a process of transferring the rights data.

Specifically, in the event that the rights transfer status 3114 is "Awaiting transfer", the portable terminal indicated by the corresponding DRM terminal ID 3113, being the old device which has been changed, is in a condition in which it has already deleted the rights data it had stored. Also, this indicates that the license management server 3000 is in a condition in which it is waiting for a request for a reissue of the rights from the new portable terminal.

Meanwhile, in the event that the rights transfer status 3114 is "-", this indicates that the portable terminal indicated by the corresponding DRM terminal ID 3113 has not been changed, and is in a condition in which it is not carrying out the process of transferring the rights data granted.

Consequently, the license management server 3000, in the event that there is a request for a reissue of rights, issues the rights data only in response to a request specifying as the old device a portable terminal indicated by DRM terminal ID 3113 of which the rights transfer status 3114 is "Awaiting transfer". After the issue, the DRM terminal ID 3113 is rewritten with the DRM terminal ID of the new device, so that the portable terminal indicated by the DRM terminal ID 3113 is the new device.

The public key 3115 being a key disclosed by a portable terminal indicated by the DRM terminal ID 3113, the portable terminal has a secret key which can decrypt data encrypted with the public key.

The rights meta-information 3116 indicates a condition of use, and the like, of rights indicated by the rights ID 3111. For example, a term for which content can be used, a number of times it can be reproduced, or the like, is stipulated.

Details of the meta-information 3116 will be updated at an appropriate time. For example, in the event that the number of reproductions is limited, the number of reproductions carried out is added to on each reproduction, in a case in which a term of validity is set, the term of validity is extended in the event that the user pays an additional fee, and so on.

Next, a description will be given of the content key management data 3120 of Fig. 8B.

The content key management data 3120, being data stored in the rights data storage 3100 of the license management server 3000, is data which manage a content encryption key. The content key management data 3120 is data for the content management server 5000 and license management server 3000 to share a content key.

The content key management data 3120 includes content ID 3121 and a content key 3122.

The content ID 3121 is a content identifier, while the content key 3122 is a key which encrypts content data.

Details the same as those of the content ID 5111 of the content management data 5110 stored in the content storage 5100 of the content management server 5000 are registered in the content ID 3121. In the same way, details the same as those of the content key 5113 of the content management data 5110 are registered in the content key 3122.

For example, rights indicated by the rights ID 3111 "C010L001" are granted in order that content indicated by the content ID 3112 "C010" can be used by a portable terminal indicated by the DRM terminal ID 3113 "DRM-A". Also, these rights are rights whereby, the rights meta-information 3116 being "Term of validity: December 31, 2008", the content indicated by "C010" can be used until December 31, 2008. Furthermore, as the rights transfer status 3114 is "Awaiting transfer", rights data transmitted to the portable terminal indicated by "DRM-A" are in a condition in which they have been deleted from the portable terminal. Also, as the public key 3115 is "PKey-A", this indicates that the fact that the content key 3122 "Key010" of the content indicated by "C010" is encrypted by the "PKey-A" is included in the rights data.

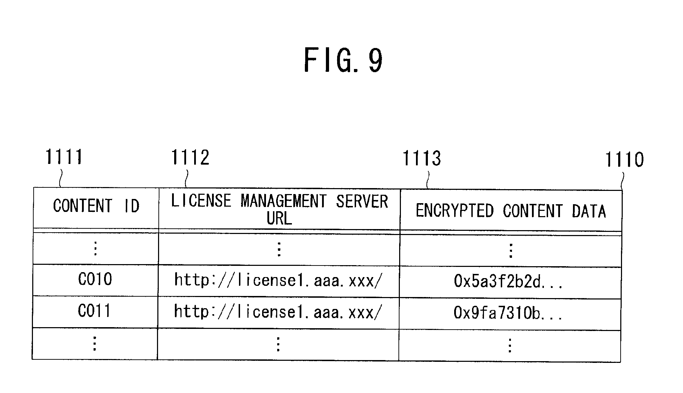

Fig. 9 is a diagram illustrating an example of a configuration and details of content management data 1110.

The content management data 1110 are data stored in the content storage 1100 of the portable terminal 1000.

The content management data 1110 include content ID 1111, a license management server URL 1112, and encrypted content data 1113. One record of the heretofore described configuration is registered per item of content in the content management data 1110 for all the items of content purchased with the portable terminal 1000. This one record is data of one item of content received from the content management server 5000 by the content acquisition module 1400 of the portable terminal 1000.

The content ID 1111 is an identifier for identifying content, the license management server URL 1112 is a URL of a license management server of a license issuer who issues content rights data, and the encrypted content data 1113 are encrypted content data.

The configuration of the content management data 1110 is the same as that of the content management data 5110 from which the content key 5113 has been removed. While content provided by the content provider is recorded in the content management data 5110, only content which the user of the portable terminal 1000 purchases from the content provider is stored in the content management data 1110.

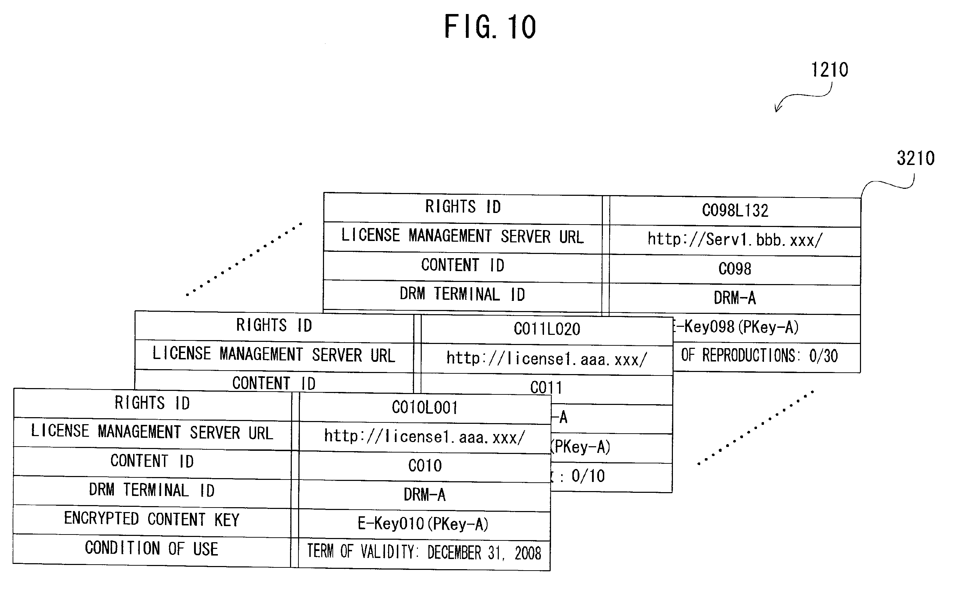

Fig. 10 is a diagram illustrating an example of a configuration and details of a rights data group 1210.

The rights data group 1210 is data stored in the rights data storage 1200 of the portable terminal 1000.

The rights data group 1210 is a collection of rights data 3210 acquired by the user of the portable terminal 1000. A description will be given hereafter, using Fig. 12, of the rights data 3210.

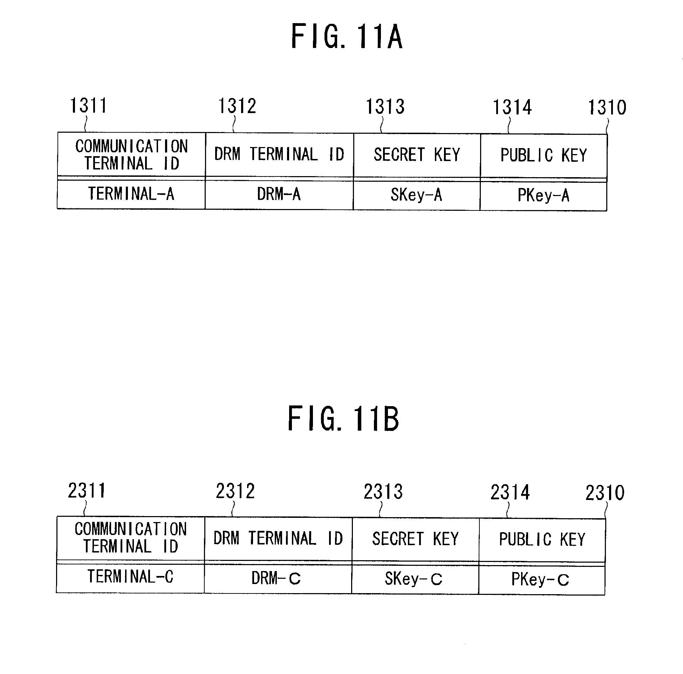

Next, Fig. 11A is a diagram illustrating an example of a configuration and details of terminal specific data 1310 stored in the terminal specific data storage 1300 of the portable terminal 1000. Fig. 11B is a diagram illustrating an example of a configuration and details of terminal specific data 2310 stored in the terminal specific data storage 2300 of the portable terminal 2000.

As the configuration of the terminal specific data 1310 and the configuration of the terminal specific data 2310 are the same, a description will be given here of only the terminal specific data 1310.

The terminal specific data 1310 include communication terminal ID 1311, DRM terminal ID 1312, a secret key 1313, and a public key 1314. These being valid only for the portable terminal, the secret key 1313 is undisclosed.

The communication terminal ID 1311 is an identifier of the portable terminal 1000 as a communication terminal.

The DRM terminal ID 1312 is an identifier of a DRM protection system with which the portable terminal 1000 is provided.

The public key 1314 is a disclosed encryption key of the portable terminal 1000, while the secret key 1313 is a key which decrypts data encrypted by the public key 1314.

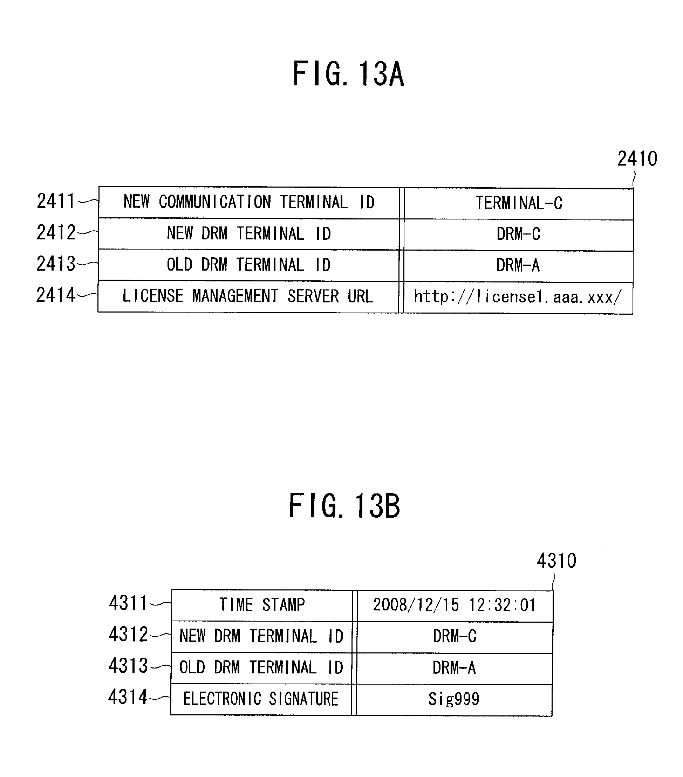

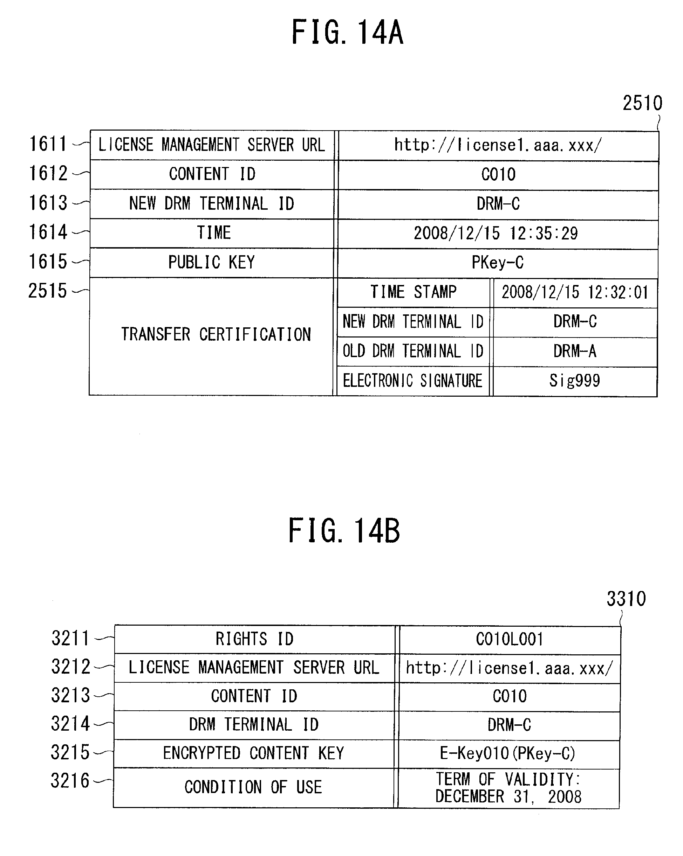

Next, a description will be given, using Figs. 12A and 12B, of data transmitted and received when issuing rights data, and a description will be given, using Figs. 13A and 13B, of data transmitted and received when issuing transfer certification. Also, a description will be given, using Figs. 14A and 14B, of data transmitted and received when reissuing rights data.

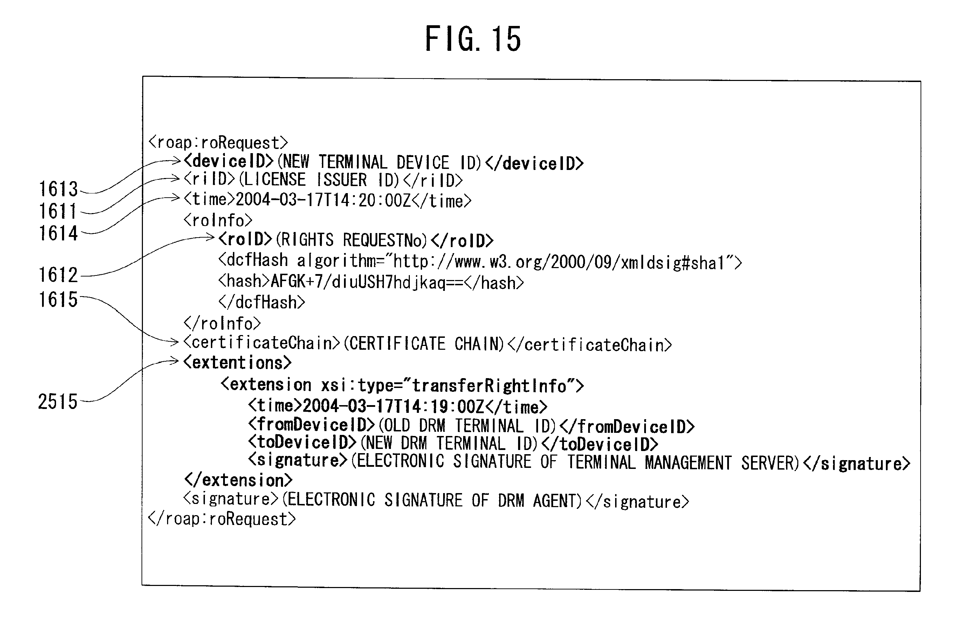

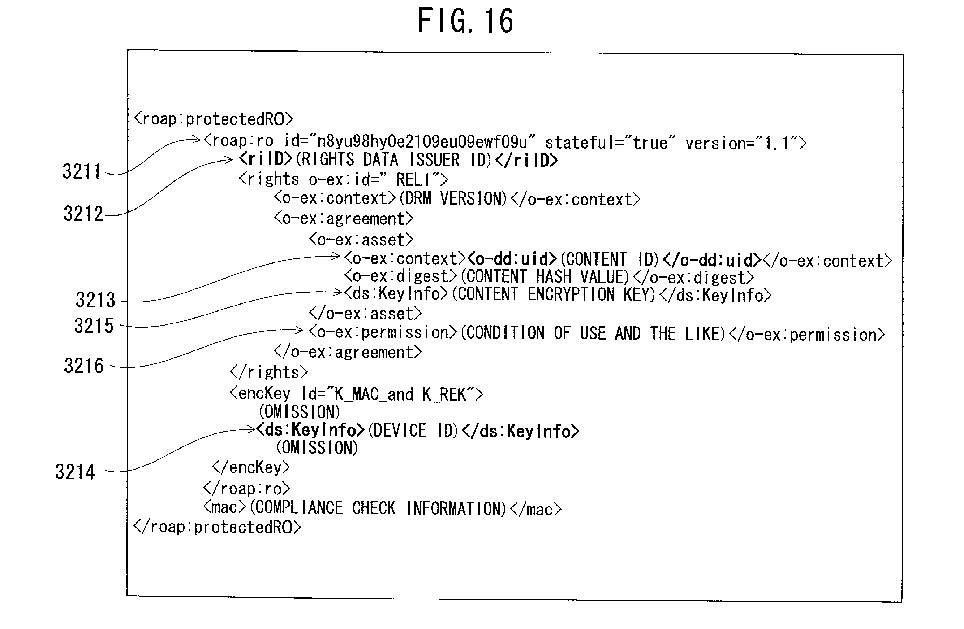

A protocol normally used between the portable terminal and license issuer is used in the transmitting and receiving of data when issuing rights data described in Figs. 12A and 12B, and Figs. 14A and 14B. Also, data written in a language such as XML is transmitted and received. Fig. 15 illustrates an example of a rights reissue request, described using Fig. 14A, written in XML, while Fig. 16 illustrates an example of rights data, described using Fig. 14B, written in XML.

Also, a protocol normally used between the portable terminal and terminal manager is used in the transmitting and receiving of data when issuing transfer certification data described in Figs. 13A and 13B.

As there are cases in which data written in a language such as XML are transmitted and received, as heretofore described, a description will be given in Figs. 12A to 14B of items of data transmitted and received.

Firstly, Fig. 12A is a diagram illustrating an example of items and details of rights issue request data 1610, while Fig. 12B is a diagram illustrating an example of items and details of rights data 3210.

The rights issue request data 1610 of Fig. 12A are data which the rights acquisition module 1600 of the portable terminal 1000 transmits in order to request rights data from the license management server 3000.

The rights issue request data 1610 include a license management server URL 1611, content ID 1612, DRM terminal ID 1613, a time 1614, and a public key 1615.

The license management server URL 1611 is a URL of a license management server of a license issuer who issues content rights data.

The content ID 1612 is an identifier of content for which rights data are to be issued, while the DRM terminal ID 1613 is an identifier of a DRM protection system to which rights data are to be granted.

The time 1614 is a time at which an issue of rights data is requested, herein, it is a time and date at which the rights issue request data 1610 are transmitted.

The public key 1615 is a public key owned by a portable terminal indicated by the DRM terminal ID 1613.

Also, the rights data 3210 of Fig. 12B are rights data which the rights issuing module 3200 of the license management server 3000 issues to the request source in response to the received rights issue request data 1610.

The rights data 3210 include rights ID 3211, a license management server URL 3212, content ID 3213, DRM terminal ID 3214, an encrypted content key 3215, and a condition of use 3216.

The rights ID 3211 is an identifier of rights data, while the license management server URL 3212 is a URL of a license management server of a license issuer who issues the rights data.

Also, the content ID 3213 is an identifier of content which the rights data make usable, while the DRM terminal ID 3214 is an identifier of a DRM protection system to which the rights data are granted.

The encrypted content key 3215 is a key which further encrypts an encryption key which encrypts content indicated by the content ID 3213. For example, the encrypted content key "E-Key010(PKey-A)" denotes a key which encrypts a content key "Key010" with a public key "PKey-A".

The condition of use 3216 indicates a condition of use of content indicated by the content ID 3213.

Next, Fig. 13A is a diagram illustrating an example of items and details of transfer certification issue request data 2410, while Fig. 13B is a diagram illustrating an example of items and details of transfer certification data 4310.

The transfer certification issue request data 2410 of Fig. 13A are data which the transfer certification acquisition module 2400 of the portable terminal 2000 transmits in order to request transfer certification from the terminal management server 4000.

The transfer certification issue request data 2410 include new communication terminal ID 2411, new DRM terminal ID 2412, old DRM terminal ID 2413, and a license management server URL 2414.

The new communication terminal ID 2411 is communication terminal ID of a portable terminal after a device change, while the new DRM terminal ID 2412 is DRM terminal ID of the portable terminal after the device change. These are the communication terminal ID and DRM terminal ID of the portable terminal which transmits the transfer certification issue request data.

The old DRM terminal ID 2413 is DRM terminal ID of the portable terminal before the device change.

Also, the license management server URL 2414 is the URL of a license issuer of whom a reissue of rights is requested using the transfer certification issued.

The transfer certification data 4310 of Fig. 13B are transfer certification data which the transfer certification issuing module 4300 of the terminal management server 4000 transmits in response to the received transfer certification issue request data 2410.

The transfer certification data 4310 include a time stamp 4311, new DRM terminal ID 4312, old terminal ID 4313, and an electronic signature 4314.

The time stamp 4311 represents a transfer certification issue time and date.

The new DRM terminal ID 4312 indicates DRM terminal ID of a portable terminal which is a new device after a device change, while the old terminal ID 4313 indicates DRM terminal ID of a portable terminal which is an old device before the device change.

The electronic signature 4314, being an electronic signature of the terminal management server 4000, represents certification that the transfer certification data are data which have been compiled by the terminal management server 4000. The hashing algorithm should be chosen from proven ones, such as RSA or Secure Hash Algorithm 1 (SHA-1).

Next, Fig. 14A is a diagram illustrating an example of items and details of rights reissue request data 2510, while Fig. 14B is a diagram illustrating an example of items and details of reissued rights data 3310.

The rights reissue request data 2510 of Fig. 14A are data which the rights reacquisition module 2500 of the portable terminal 2000 transmits in order to request rights data from the license management server 3000.

The rights reissue request data 2510 are data wherein transfer certification 2515 is added to the rights issue request data 1610 indicated by the license management server URL 1611 to the public key 1615. The transfer certification 2515 is the transfer certification data 4310 acquired by the transfer certification acquisition module 2400.

Also, the reissued rights data 3310 of Fig. 14B are rights data which the rights issuing module 3200 of the license management server 3000 transmits in response to the received rights reissue request data 2510.

The reissued rights data 3310 are of the same configuration as the rights data 3210. However, they are rights data relating to the rights reissue request data 2510. Specifically, a new device identifier is set in the DRM terminal ID 3214, and a content key encrypted with a new terminal public key is set in the encrypted content key 3215.

An example of the rights reissue request data 2510 written in XML is illustrated in Fig. 15.

In Fig. 15, a line which sets an item of the rights reissue request data 2510 is pointed by the same number as that of the item. For example, the line which sets the license management server URL 1611 is "<riID>(license issuer ID)</riID>" pointed by an arrow 1611.

An example of the rights data 3210 written in XML is illustrated in Fig. 16.

In Fig. 16, in the same way as in Fig. 15, a line which sets an item of the rights data 3210 is pointed by the same number as that of the item.

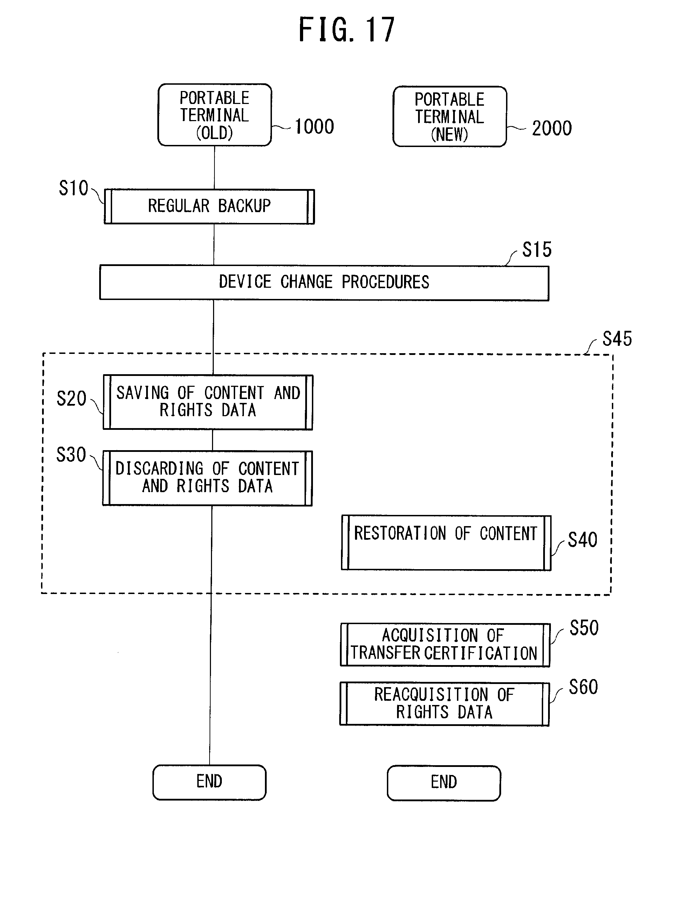

Hereafter, a description will be given, using Figs. 17 to 20, of an operation of the content management system 100 of the embodiment 1.

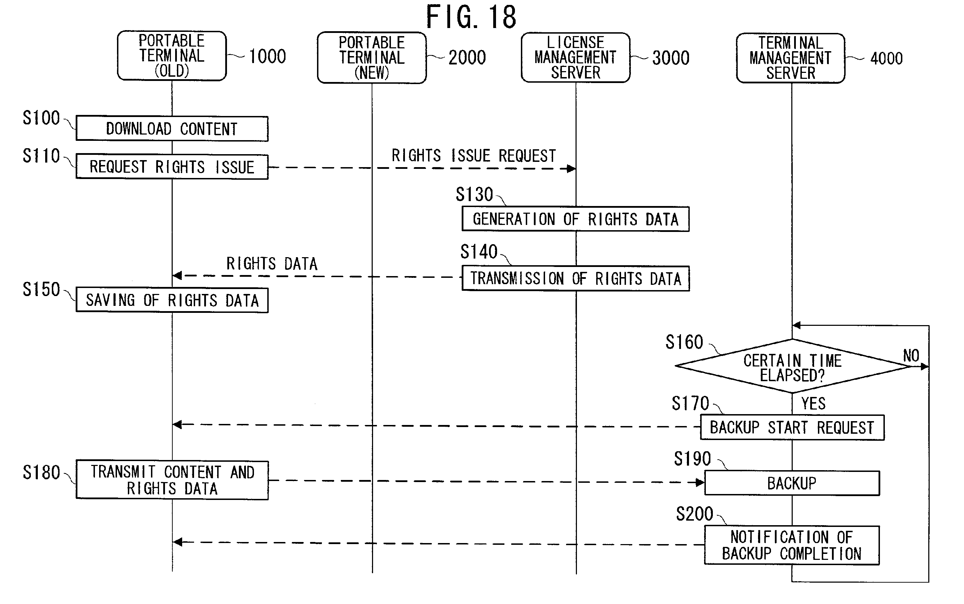

Fig. 17 is a diagram illustrating a flow of a process when changing a portable terminal in the embodiment 1. A description will be given hereafter, using Figs. 18 to 22, of details of steps S10 to S60 in Fig. 17.

The flow of the process until the portable terminal 2000 acquires the rights data, in the event that the device is changed from the portable terminal 1000 to the portable terminal 2000, is illustrated here.

Firstly, the portable terminal 1000 of the embodiment 1 regularly backs up content management data and rights data which the terminal itself is storing at the terminal management server 4000 (step S10). This is in order to deal with a case in which the portable terminal 1000 breaks down, is lost, or the like.

At this point, a process of changing the device from the portable terminal 1000 to the portable terminal 2000 is carried out (step S15).

On the device changing process finishing, a transfer of the content management data and rights data from the portable terminal 1000 to the portable terminal 2000 is carried out (step S45).

The process of transferring the content management data and rights data is carried out in the following three steps.

Firstly, the content management data and rights data stored by the portable terminal 1000 are saved from the portable terminal 1000 at the terminal management server 4000 (step S20). In the event that the content management data and rights data saved in the regular backup (step S10) are the same as the content and the like to be saved in step S20, it is acceptable not to carry out the saving process of step S20.

Next, as a second step, a discarding of the content management data and rights data stored by the portable terminal 1000 is carried out (step S30). It is assumed that the portable terminal 1000 is in a usable condition until the second step, and that it is cut off from the communication network after the completion of the process of the second step.

As a third step, the content management data and rights data saved at the terminal management server 4000 are restored to the portable terminal 2000 (step S40).

Herein, the three steps are carried out in this order so as to prevent both the portable terminal 1000 and portable terminal 2000 being able to use the content. That is, in the event that the same content management data and rights data are restored to the portable terminal 2000 before the deletion of the content management data and rights data is carried out in the portable terminal 1000, a case may occur wherein the portable terminal 1000 can continue to use the content in the event that, for some reason, the deletion of the rights data of the portable terminal 1000 is not carried out.

As long as it is guaranteed that the content management data and rights data stored by the portable terminal 1000 are transferred to the portable terminal 2000, the restoration process is not limited to this order.

As the rights data restored to the portable terminal 2000 are rights data which enable content to be used in the portable terminal 1000, it is not possible for the portable terminal 2000 to use the content.

Therein, the portable terminal 2000, firstly, acquires transfer certification from the terminal management server 4000 proving that there has been a change of device from the portable terminal 1000 to the portable terminal 2000 (step S50).

The portable terminal 2000, attaching the acquired transfer certification, requests a reissue of the rights data from the license management server 3000 (step S60).

On the rights data being issued in response to the request, the portable terminal 2000 becomes able to use the content.

Next, using Fig. 18, a description will be given of a process of the portable terminal 1000 acquiring content data and rights data, and of the regular backup process (Fig. 17: step S10).

Firstly, a description will be given of the process of the portable terminal 1000 acquiring content data, and rights data thereof.

The content acquisition module 1400 of the portable terminal 1000 receives an instruction from the user to acquire content, and requests the content management server 5000 to transmit the content specified by the user, for example, the content of which the content ID 5111 is "C010" (refer to Fig. 7).

The content transmission module 5100 of the content management server 5000 which receives the request retrieves one set of the content data of the specified content from the content storage 5100, and transmits it to the portable terminal 1000. Herein, one set of the content data shall be assumed to be, of the content management data 5110 stored in the content storage 5100, the content ID 5111, the license management server URL 5112, and the encrypted content data 5114. For example, the set of content data retrieved in the case of transmitting the content indicated by the content ID 5111 "C010" is the content ID 5111 "C010", the license management server URL 5112 "http://licencel.aaa.xxx/", and the encrypted content data 5114 "0x5a3...".

The content acquisition module 1400 of the portable terminal 1000 which receives the set of content data from the content management server 5000 stores the received set of content data in the content storage 1100 (step S100, refer to Fig. 9).

Next, the rights acquisition module 1600, on receiving an instruction from the user to acquire content rights data, generates the rights issue request data 1610 (refer to Fig. 12A) of the content specified by the user.

Specifically, the rights acquisition module 1600, referring to the content management data 1110 stored in the content storage 1100, sets the content ID 1111 of the content specified by the user in the content ID 1612 of the rights issue request data 1610. Also, the rights acquisition module 1600 sets the license management server URL 1112 corresponding to the content ID 1111 of the content specified by the user in the license management server URL 1611. Also, the rights acquisition module 1600 sets the DRM terminal ID 1312 of the terminal specific data 1310 stored in the terminal specific data storage 1300 in the DRM terminal ID 1613, and sets the public key 1314 in the public key 1615. Furthermore, the rights acquisition module 1600 acquires the current time from a timer (not illustrated) provided in the portable terminal 1000, and sets it in the time 1614.

The rights acquisition module 1600 accesses the license management server URL 1611, and transmits the generated rights issue request data 1610 to the license management server 3000 (step S110).

The rights issuing module 3200 of the license management server 3000 which receives the rights issue request data 1610 transmitted by the rights acquisition module 1600 of the portable terminal 1000 generates the rights data 3210 (step S130).

Specifically, the rights issuing module 3200 sets the rights ID 3211 in accordance with specific rules, and sets the URL of the license management server 3000 in the license management server URL 3212. Also, the rights issuing module 3200 sets an identifier of the content for which the rights are to be granted in the content ID 3213, and the DRM terminal ID 1613 to which the rights are to be granted in the DRM terminal ID 3214. Also, the rights issuing module 3200 retrieves the content key 3122 of the relevant content ID 3121 from the content key management data 3120 stored in the rights data storage 3100, encrypts it with the public key 1615 of the received rights issue request data 1610, and sets it in the encrypted content key 3215. The rights issuing module 3200 sets a condition of use of the content ID 3121 in the condition of use 3216.

The rights issuing module 3200 adds a record with the same details as those of the generated rights data 3210 to the license management data 3110 stored in the rights data storage 3100. Specifically, the rights issuing module 3200 sets the rights ID 3211 in the rights ID 3111. Also, the rights issuing module 3200 sets the content ID 3213 in the content ID 3112, and the DRM terminal ID 3214 in the DRM terminal ID 3113. Furthermore, the rights issuing module 3200 sets "-" in the rights transfer status 3114, the public key 1615 in the public key 3115, and the condition of use 3216 in the rights meta-information 3116.

Next, the rights issuing module 3200 transmits the generated rights data 3210 to the portable terminal 1000 (step S140).

The rights acquisition module 1600 of the portable terminal 1000 which receives the rights data 3210 from the license management server 3000 stores the received rights data 3210 in the rights data storage 1200 (step S150).

Next, a description will be given of the process of regularly saving the content management data and rights data stored by the portable terminal 1000 at the terminal management server 4000.

Firstly, when the data saving and restoration module 4400 of the terminal management server 4000 detects that a certain time, for example, one week, has elapsed (step S160: Yes), it requests the portable terminal 1000 to transmit the content management data and rights data (step S170).

The data saving and discarding module 1500 of the portable terminal 1000 which receives the request from the terminal management server 4000 retrieves the content management data 1110 from the content storage 1100, and the rights data group 1210 from the rights data storage 1200, and transmits them to the terminal management server 4000 (step S180).

The data saving and restoration module 4400 of the terminal management server 4000 which receives the content management data 1110 and rights data group 1210 from the portable terminal 1000 adds them to the saved data 4210 of the saved data storage 4200, or updates the saved data 4210 (step S190).

Specifically, in the event that the communication terminal ID indicating the portable terminal 1000 is not registered in the communication terminal ID 4211 of the saved data 4210, the received content management data and rights data are added. The communication terminal ID indicating the portable terminal 1000 is registered in the communication terminal ID 4211, and the rights data group 1210 and content management data 1110 are registered in the corresponding saved rights data 4212 and saved content data 4213.

Also, in the event that the communication terminal ID 4111 of the portable terminal 1000 is "Terminal-A", it already being stored, the saved rights data 4212 and saved content data 4213 corresponding to the communication terminal ID 4111 "Terminal-A" are updated with the received rights data group 1210 and content management data 1110.

The data saving and restoration module 4400 which stores the received content management data 1110 and rights data group 1210 in the saved data storage 4200 notifies the portable terminal 1000 of the fact that the saving is completed (step S200).

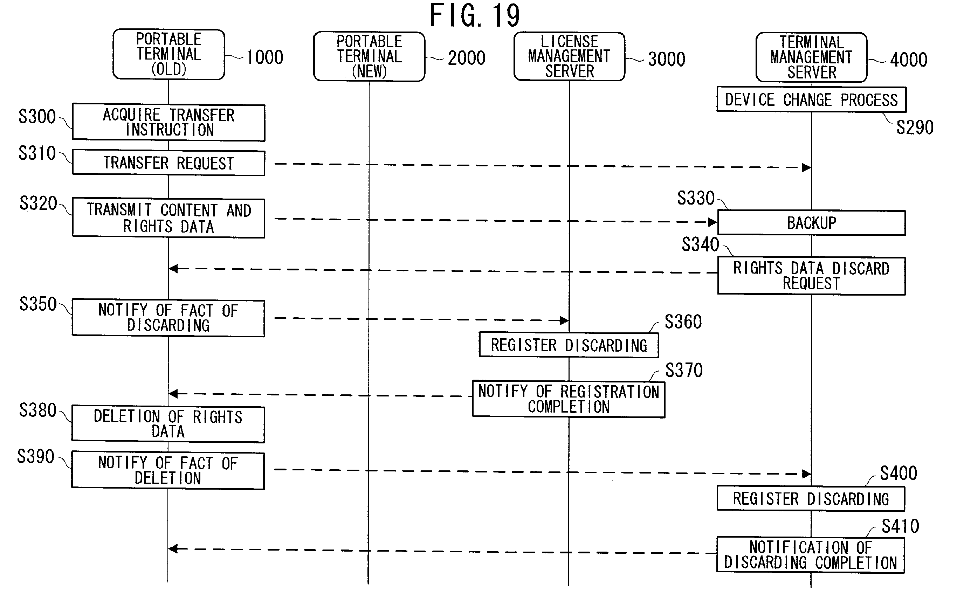

Next, using Fig. 19, a description will be given of the device changing process (Fig. 17: step S15), the process of saving the content management data and rights data stored by the portable terminal 1000 (Fig. 17: step S20), and the process of discarding the stored content management data and rights data (Fig. 17: step S30).

Firstly, the device changing process is performed in the terminal management server 4000 (step S290).

Specifically, an operator carries out a registration of a beginning of use of the portable terminal 2000, which is the new device, and inputs the device change, specifying the portable terminal 1000, which is the old device, and the portable terminal 2000, which is the new device.

The terminal management server 4000 which detects the operator's input registers a record of the portable terminal 2000, which is the new device, in the terminal management data 4110 stored in the terminal management data storage 4100. Next, the terminal management server 4000 registers an identifier of the portable terminal 1000, which is the old device, and an identifier of the portable terminal 2000, which is the new device, in the terminal change data 4120.

For example, in the event that the identifier of the portable terminal 1000, which is the old device, is "Terminal-A", and the identifier of the portable terminal 2000, which is the new device, is "Terminal-C", "Terminal-C" is registered in addition to "Terminal-A", which is already registered in the terminal management data 4110. Also, "Terminal-A" is registered as the old communication terminal ID 4121, and "Terminal-C" as the new communication terminal ID 4122, in the terminal change data 4120.

After the finish of the device change process, the user instructs the portable terminal 1000 to transfer the content management data and rights data stored by the portable terminal 1000 to the portable terminal 2000. Although it is assumed in the embodiment 1 that the user instructs the transfer, it is also acceptable to assume that it is carried out automatically after the finish of the device change process.

The portable terminal 1000 which detects the transfer instruction (step S300) notifies the terminal management server 4000 of the fact that the transfer of the content management data and rights data is to be started (step S310).

The terminal management server 4000 which receives the notification instructs the data saving and restoration module 4400 to save the content management data and rights data from the portable terminal 1000.

The data saving and restoration module 4400 which receives the saving instruction receives the content management data and rights data from the portable terminal 1000, and saves them in the saved data storage (steps S320 and S330). Details of the saving process at this point are the same as those of steps S170 to S200 described using Fig. 18.

The data saving and restoration module 4400 which completes the saving of the content management data and rights data requests the portable terminal 1000 to discard the content management data and rights data (step S340).

The data saving and discarding module 1500 of the portable terminal 1000 which receives the discard request, firstly, notifies the license management server 3000 of the fact that the rights data are to be transferred (step S350). Specifically, the data saving and discarding module 1500, referring to the rights data group 1210 stored in the rights data storage 1200, notifies the license management server URL 3212 of each kind of rights data 3210 of the fact that the rights data are to be discarded. At the time of this notification, the DRM terminal ID 3214 (refer to Figs. 10 and 12B), that is, the DRM terminal ID of the portable terminal 1000, is also notified of.

The rights issuing module 3200 of the license management server 3000 which receives the notification makes, of the license management data 3110 stored in the rights data storage 3100, the rights transfer status 4114 with the same DRM terminal ID 3113 as the DRM terminal ID of which notification is received "Awaiting transfer" (step S360), and notifies the portable terminal 1000 of the fact that it has registered the discarding accompanying the transfer (step S370).

The data saving and discarding module 1500 of the portable terminal 1000 which receives the notification of the fact of the registration from the license management servers of all the rights data 3210 deletes the content management data 1100 stored in the content storage 1100, and the rights data group 1210 stored in the rights data storage 1200 (step S380).

The data saving and discarding module 1500 which deletes the content management data 1100 and rights data group 1210 notifies the terminal management server 4000 of the fact that the discarding of the content management data and rights data is completed (step S390).

The data saving and restoration module 4400 of the terminal management server 4000 which receives the notification registers the fact that the rights data of the portable terminal 1000 have been discarded (step S400). Specifically, the data saving and restoration module 4400 makes the rights transfer status 4114 of the record in which the communication terminal ID 4111 of the terminal management data 4110 stored in the terminal management data storage 4100 indicates the portable terminal 1000 "Awaiting transfer".

Subsequently, the data saving and restoration module 4400 notifies the portable terminal 1000 of the fact that the discarding has been registered (step S410).

In the event that there is a guarantee that the discarding of the rights data is reliably carried out in the portable terminal 1000, it is acceptable not to carry out the registration with the license management server 3000 of steps S350 to S370.

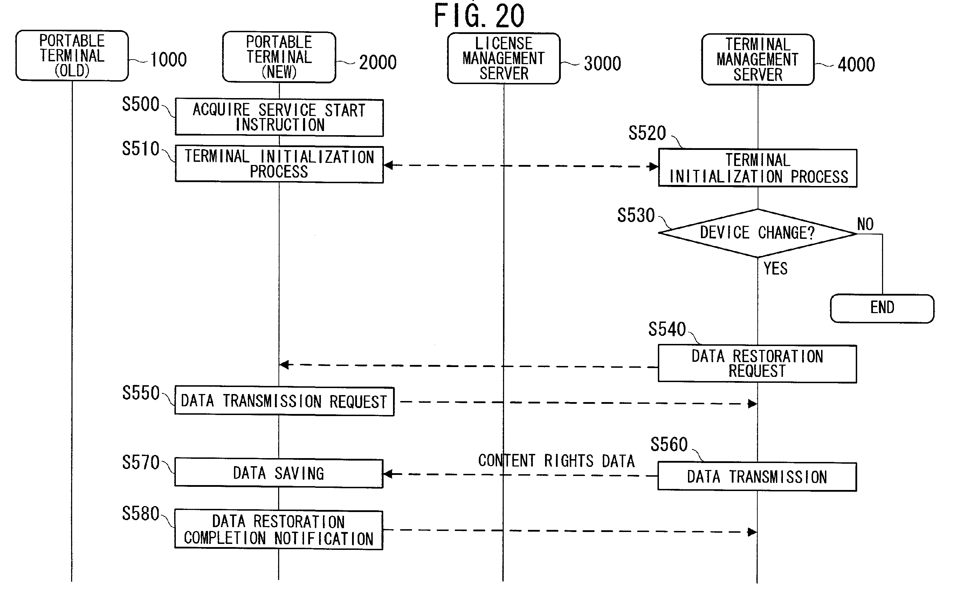

Next, using Fig. 20, a description will be given of the process of restoring the content management data and rights data to the portable terminal 2000 (Fig. 17: step S40).

Firstly, the user instructs the portable terminal 2000 of the fact that use is to be started.

The portable terminal 2000 which detects the instruction of the fact that use is to be started (step S500) carries out a normal initialization process with the terminal management server 4000 (steps S510 and S520).

The terminal management server 4000 which finishes the normal initialization process confirms whether or not the identifier of the portable terminal which has carried out the initialization is registered in the new communication terminal ID 4122 of the terminal change data 4210 of the terminal management data storage 4100. In the event that the identifier is not registered, the terminal management server 4000 determines that the portable terminal is not a new device to which a device change has been made (step S530: No), and finishes the initialization process. Meanwhile, in the event that the identifier is registered, the terminal management server 4000 determines that the portable terminal is a new device to which a device change has been made (step S530: Yes), and carries out the restoration process.

The terminal management server 4000, in the event of determining that the portable terminal is a new device to which a device change has been made (step S530: Yes), requests the data saving and restoration module 4400 to restore the data. The data saving and restoration module 4400 which receives the request requests the portable terminal 2000 to carry out the restoration (step S540).

The data restoration module 2600 of the portable terminal 2000 which receives the data restoration request requests the terminal management server 4000 to transmit the data (step S550).

The data saving and restoration module 4400 of the terminal management server 4000 which receives the data transmission request retrieves the data of the portable terminal 1000, the old device from which a device change has been made to the portable terminal 2000 which is the new device which has carried out the initialization process, from the saved data 4210 of the saved data storage 4200, and transmits them to the portable terminal 2000 (step S560).

The data saving and restoration module 4400 acquires the portable terminal which is the old device by referring to the terminal change data 4120. That is, the data saving and restoration module 4400 finds the identifier of the portable terminal which is the new device by searching for the new communication terminal ID 4122, and the corresponding old communication terminal ID 4121 is the identifier of the portable terminal which is the old device.

Consequently, the data saving and restoration module 4400 retrieves the saved rights data 4212 and saved content data 4213 correlated to the communication terminal ID 4211 of the saved data 4210 of the saved data storage 4200 which is the identifier of the portable terminal which is the old device, and transmits them to the portable terminal 2000.

For example, in the event that the portable terminal which carries out the initialization process is "Terminal-C", the data saving and restoration module 4400 retrieves the saved rights data 4212 and saved content data 4213 correlated to the communication terminal ID 4211 which is the old communication terminal ID 4121 "Terminal-A", corresponding to the new communication terminal ID 4122 "Terminal-C", and transmits them to the portable terminal "Terminal-C", which is the new device.

The data restoration module 2600 of the portable terminal 2000 which receives the saved rights data 4212 and saved content data 4213 stores them in the rights data storage 2200 and content storage 2100 respectively (step S570), and notifies the terminal management server 4000 of the fact that the data restoration is completed (step S580).

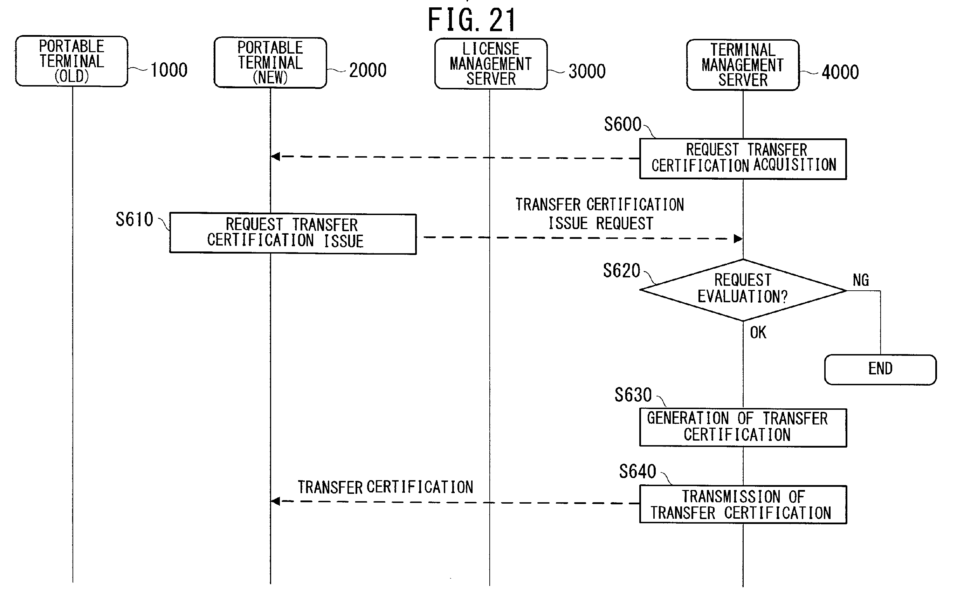

Next, using Fig. 21, a description will be given of the process of acquiring transfer certification (Fig. 17: step S50).

The data saving and restoration module 4400 of the terminal management server 4000 which receives the notification of the fact that the data restoration is completed notifies the transfer certification issuing module 4300 of the fact.

The transfer certification issuing module 4300 which receives the notification requests the portable terminal 2000 to acquire transfer certification (step S600).

The transfer certification acquisition module 2400 of the portable terminal 2000 which receives the transfer certification acquisition request generates the transfer certification issue request data 2410. The transfer certification is prepared for each license management server. Consequently, in the event that the license management server URL 3212 of all the rights data 3210 included in the rights data group 1210 is the same, it is sufficient to generate one item of transfer certification issue request data 2410.

The transfer certification acquisition module 2400 refers to the terminal specific data 2310 stored in the terminal specific data storage 2300 (refer to Fig. 11B), and the rights data 3210 of the rights data group 1210 restored to the rights data storage 2200, and generates the transfer certification issue request data 2410.

Specifically, the transfer certification acquisition module 2400 sets the communication terminal ID 2311 of the terminal specific data 2310 stored in the data storage 2300 in the new communication terminal ID 2411, and sets the DRM terminal ID 2312 in the new DRM terminal ID 2412. Also, the transfer certification acquisition module 2400 sets the DRM terminal ID 3214 of the rights data 3210 of the rights data group 1210 restored to the rights data storage 2200 in the old DRM terminal ID 2414, and the license management server URL 3212 in the license management server URL 2414.

The transfer certification acquisition module 2400 transmits the generated transfer certification issue request data 2410 to the terminal management server 4000 (step S610).

The transfer certification issuing module 4300 of the terminal management server 4000 which receives the transfer certification issue request data 2410 evaluates the received transfer certification issue request data 2410 (step S620).

The evaluation is carried out by confirming the following three conditions.

Firstly, the first condition is that the portable terminal indicated by the new communication terminal ID 2411 and new DRM terminal ID 2412 of the received transfer certification issue request data 2410 is the portable terminal which is the new device after the device replacement, the second condition is that the portable terminal indicated by the old DRM terminal ID 2413 is the portable terminal which is the old device before the device replacement, and the third condition is that the rights data, and the like, of the portable terminal indicated by the old DRM terminal ID 2413 have been discarded.

Specifically, firstly, a description will be given of a method of confirming the first condition.

The transfer certification issuing module 4300 confirms whether the new communication terminal ID 2411 is registered in the new communication terminal ID 4122 of the terminal change data 4120. In the event that it is registered, the transfer certification issuing module 4300 confirms that the DRM terminal ID 4113 of a record in which the communication terminal ID 4111 of the terminal management data 4110 is the same as the new communication terminal ID 2411 is the same as the new DRM terminal ID 2412. In the event that it is the same, the transfer certification issuing module 4300 determines that the portable terminal indicated by the new communication terminal ID 2411 is the portable terminal which is the new device after the device change.

For example, it is assumed that the new communication terminal ID 2411 is "Terminal-C". That the new communication terminal ID 2411 is "Terminal-C" is registered in the new communication terminal ID 4122. In the event that the DRM terminal ID 4113 of the communication terminal ID 4111 "Terminal-C" of the terminal management data 4110 is the same "DRM-C" as the new DRM terminal ID 2412, it is determined that the portable terminal indicated by the new communication terminal ID 2411 "DRM-C" is the portable terminal which is the new device after the device change.

Next, a description will be given of a method of confirming the second condition.

The old DRM terminal ID 2413 is the identifier of the portable terminal which is the old device indicated by the old communication terminal ID 4121 stored corresponding to the new communication terminal ID 2411 registered in the new communication terminal ID 4122 of the terminal change data 4120. Consequently, the transfer certification issuing module 4300 confirms that the DRM terminal ID 4113 of the record in which the communication terminal ID 4111 of the terminal management data 4110 is the identifier of the portable terminal which is the old device is the same as the old DRM terminal ID 2413. In the event that it is the same, the transfer certification issuing module 4300 determines that the portable terminal indicated by the old DRM terminal ID 2413 is the portable terminal which is the old device before the device change.

For example, it is assumed that the new communication terminal ID 2411 is "Terminal-C", and the old DRM terminal ID 2413 is "DRM-A". In the terminal change data 4120, the old communication terminal ID 4121 corresponding to the new communication terminal ID 4122 "Terminal-C" is "Terminal-A". In the event that the DRM terminal ID 4113 when the communication terminal ID 4111 of the terminal management data 4110 is "Terminal-A" is the same "DRM-A" as the old DRM terminal ID 2413, it is determined that the portable terminal indicated by the old DRM terminal ID 2413 "DRM-A" is the portable terminal which is the old device before the device replacement.

Next, a description will be given of a method of confirming the third condition.

In the event that the rights transfer status 4114 of the terminal management data 4110 of the portable terminal indicated by the old DRM terminal ID 2413 is "Awaiting transfer", the transfer certification issuing module 4300 determines that the rights data, and the like, have been discarded.

For example, it is assumed that the old DRM terminal ID 2413 is "DRM-A". In the event that the rights transfer status 4114 of the record in which the communication terminal ID 4111 of the terminal management data 4110 is "DRM-A" is "Awaiting transfer", the transfer certification issuing module 4300 determines that the rights data of the portable terminal indicated by the old DRM terminal ID 2413 have been deleted.

In the evaluation of the received transfer certification issue request data 2410, in the event that all three conditions are granted (step S620: OK), the transfer certification issuing module 4300 generates the transfer certification data 4310 (step S630), while in the event that even one of the condition is not granted (step S620: NG), the transfer certification issuing module 4300 does not carry out the issue of the transfer certification.

For the generation of the transfer certification data 4310, specifically, the transfer certification issuing module 4300 acquires the current time from a timer provided in the terminal management server 4000, and sets it in the time stamp 4311. Also, the transfer certification issuing module 4300 sets the new DRM terminal ID 2412 of the transfer certification issue request data 2410 in the new DRM terminal ID 4312, and the old DRM terminal ID 2413 in the old DRM terminal ID 4313, and sets the electronic signature 4314.

The transfer certification issuing module 4300 transmits the generated transfer certification data 4310 to the portable terminal 2000 (step S640). Subsequently, the transfer certification issuing module 4300 deletes the record in which the DRM terminal ID 4113 is the same identifier as the old DRM terminal ID 4313 from the terminal management data 4110. Also, the transfer certification issuing module 4300 deletes the record in which the new communication terminal ID 4122 is the same as the new communication terminal ID 2411 from the terminal change data 4120.

The transfer certification acquisition module 2400 of the portable terminal 2000 receives the transfer certification data 4310.

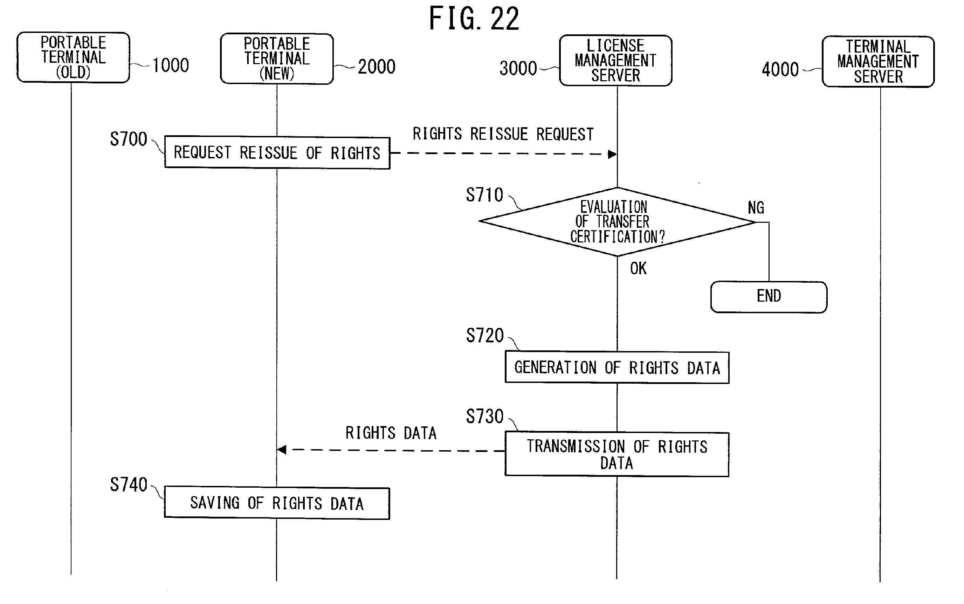

Next, using Fig. 22, a description will be given of the process of reacquiring rights data (Fig. 17: step S60).

The transfer certification acquisition module 2400 of the portable terminal 2000 which receives the transfer certification data 4310, passes the received transfer certification data 4310 on to the rights reacquisition module 2500, and requests to reacquire the rights data.

The rights reacquisition module 2500 which receives the request generates the rights reacquisition request data 2510 (refer to Fig. 14A).

Specifically, the rights reacquisition module 2500 generates the rights issue request data 1610 in the way generated by the rights acquisition module 1600 of the portable terminal 1000 (refer to step S110 of Fig. 18), and adds the received transfer certification data 4310, generating the rights reacquisition request data 2510.

To describe simply, the rights reacquisition module 2500, referring to the content management data 1110 stored in the content storage 2100, sets the content ID 1111 in the content ID 1612, and sets the license management server URL 1112 corresponding to the content ID 1111 in the license management server URL 1611. Also, the rights reacquisition module 2500 sets the DRM terminal ID 2312 of the terminal specific data 2310 stored in the terminal specific data storage 2300 in the DRM terminal ID 1613, and sets the public key 2314 in the public key 1615. Furthermore, the rights reacquisition module 2500 acquires the current time from a timer provided in the portable terminal 2000, sets it in the time 1614, and sets the received transfer certification data 4310 in the transfer certification 2515.

The rights reacquisition module 2500 accesses the license management server URL 1611, and transmits the generated rights reissue request data 2510 (step S700).

The rights reissuing module 3300 of the license management server 3000 which receives the rights reissue request data 2510 requests an authentication of the transfer certification 2515 included in the received rights reissue request data 2510 from the transfer certification authentication module 3400.

The transfer certification authentication module 3400 which receives the request authenticates the electronic signature of the transfer certification 2515, and notifies the rights reissuing module 3300 of the authentication result.

The rights reissuing module 3300 which receives the notification of the authentication result, in the event that the received authentication result is positive, confirms whether the rights requested by the rights reissue request data 2510 are the same rights as those of the rights data deleted from the portable terminal which is the old device.

Specifically, the rights reissuing module 3300 checks the following two conditions.

The first condition is that the rights relating to the content for which the rights are requested by the rights reissue request data 2510 have already been issued to the portable terminal which is the old device, and the second condition is that the rights reissuing module 3300 confirms that the rights have been deleted from the portable terminal which is the old device.

A description shows how the second condition will be checked.

The rights reissuing module 3300 searches to find whether the set of the content ID 1612 of the rights reissue request data 2510 and old DRM terminal ID of the transfer certification 2515 is registered in the content ID 3112 and DRM terminal ID 3113 of the license management data 3110.

In the event that the set is registered, it is thereby confirmed that the rights relating to the content for which the rights are requested by the rights reissue request data 2510 have already been issued to the portable terminal which is the old device.

Next, a description will be given of a method of checks the second condition.

In the confirmation of the second condition, the rights reissuing module 3300 refers to the rights transfer status 3114 of the record registered in the license management data 3110. In the event that the rights transfer status 3114 is "Awaiting transfer", it is thereby confirmed that the rights have been deleted from the portable terminal which is the old device.

For example, it is assumed that the content ID 2512 is "C010", and the old DRM terminal ID of the transfer certification 2515 is "DRM-A". The rights of which the content ID 3112 of the license management data 3110 is "C010", and of which the DRM terminal ID 3113 is "DRM-A", are the rights indicated by the rights ID 3111 "C010L001". The rights transfer status 3114 of the rights ID 3111 "C010L001" is "Awaiting transfer". Consequently, the rights have already been issued to the portable terminal indicated by the old DRM terminal ID "DRM-A", and also, the issued rights data have been deleted.

The rights reissuing module 3300 which has confirmed the heretofore described two conditions (step S710: OK) generates the rights data (step S720).

Meanwhile, in the event that the authentication result received from the transfer certification authentication module 3400 is negative, and in the event that the rights transfer status 3114 of the license management data 3110 is "-" (step S710: NG), the rights reissuing module 3300 finishes the process without generating the rights data.

The generation of the rights data 3310 carried out by the rights reissuing module 3300 is carried out in the same way as that in which the rights issuing module 3200 generates the rights data 3210 (refer to step S130 of Fig. 18).

At this time, the rights identifier set in the rights ID 3211 of the rights data 3310 is the same identifier as that of the rights already issued to the portable terminal which is the old device (hereafter called the "old rights").

The rights reissuing module 3300 which generates the rights data 3310 rewrites the details of the old rights registered in the license management data 3110 in accordance with the details of the reissued rights.

Specifically, the rights reissuing module 3300 sets the DRM terminal ID of the portable terminal which is the new device in the DRM terminal ID 3113 of the record of the old rights of the license management data 3110, sets the public key of the portable terminal which is the new device in the public key 3115, and sets "-" in the rights transfer status 3114.

For example, it is assumed that the rights indicated by the rights ID 3111 "C010L001" are the old rights, the DRM terminal ID of the portable terminal which is the new device is "DRM-C", and the public key is "PKey-A". The rights reissuing module 3300 rewrites the DRM terminal ID 3113 of the record in which the rights ID 3111 is "C010L001" from "DRM-A" to "DRM-C", and rewrites the public key 3115 from "PKey-A" to "PKey-C". Also, the rights reissuing module 3300 rewrites the rights transfer status 3114 as "-".

The rights reissuing module 3300 which has rewritten the license management data 3110 transmits the generated rights data 3310 to the portable terminal 2000 (step S730).

The rights reacquisition module 2500 of the portable terminal 2000 which receives the rights data 3310 stores the received rights data 3310 in the rights data storage 2200 (step S740).

### Embodiment 2

In the embodiment 1, a description has been given of a case of changing the device from the portable terminal 1000 to the portable terminal 2000. With the device change of the embodiment 1, a case is assumed in which the user voluntarily replaces the device by means of a purchase, or the like, with the precondition that the portable terminal 1000 operates normally.

However, as a reason for replacing the device, there may also be a case in which the portable terminal was broken, or lost, and the like.

Therein, in an embodiment 2, a description will be given of a content management system which enables content used in the portable terminal 1000 to be used in the portable terminal 2000, even in the event that the portable terminal 1000, which is the old device, becomes unusable due to a breakdown, or the like.

Even in the event that the portable terminal 1000, which is the old device, is unusable, basically, by having the rights data reissued by the kind of procedure described in the embodiment 1, the portable terminal 2000, which is the new terminal, becomes able to use the content.

However, the license management server 3000 reissues the rights data only in the event that the rights transfer status 3114 of the license management data 3110 is "Awaiting transfer", that is, the rights data stored by the portable terminal 1000, which is the old device, have been deleted.

However, the rights transfer status 3114 is made "Awaiting transfer" only when the license management server 3000 receives notification from the portable terminal 1000, which is the old terminal. This is because it is the portable terminal 1000 which actually executes the deletion which can detect that the stored rights data have been deleted.

Consequently, in a case in which the portable terminal 1000 is unusable, despite it being the same condition as the rights data being deleted, it is not possible to notify the license management server 3000 of the fact that the rights data have been deleted.

Therein, in the embodiment 2, a description will be given of a license management system wherein, even in the event that the portable terminal 1000 is unusable, a notification is given to the license management server 3000 of the fact that the condition is the same as that in which the rights data stored by the portable terminal 1000 have been deleted.

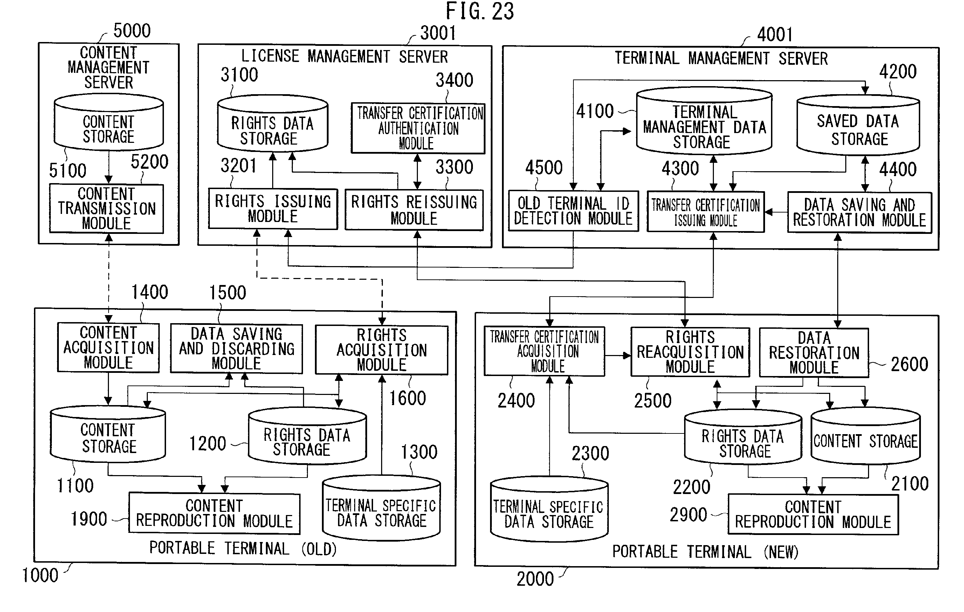

Fig. 23 is a block diagram illustrating an example of a functional configuration of the content management system of the embodiment 2.

Herein, a description will be given only of differences from the functional block diagram of the content management system 100 of the embodiment 1 described using Fig. 4.

Different instruments are a terminal management server 4001 and a license management server 3001.

Firstly, the terminal management server 4001 differs in comparison with the terminal management server 4000 of Fig. 4 in that an old terminal ID detection module 4500 is added.

The old terminal ID detection module 4500 has a function of notifying a license management server 3001 of the DRM terminal ID of the portable terminal which has become unusable. The portable terminal which has become unusable is notified of by the terminal management server 4001.

Furthermore, the old terminal ID detection module 4500 has a function of registering the fact that the rights data stored by the portable terminal 1000, which has become unusable, have been deleted. Specifically, the rights transfer status 4114 of the terminal management data 4110 is made "Awaiting transfer".

In the embodiment 1, when receiving notification of the fact that the rights data have been discarded from the portable terminal 1000, the data saving and restoration module 4400 makes the rights transfer status 4114 "Awaiting transfer" (refer to step S400 of Fig. 19).

Next, comparing the license management server 3001 with the license management server 3000 of Fig. 4, the difference is a rights issuing module 3201.

The rights issuing module 3200 of the license management server 3000 of Fig. 4 sets "Awaiting transfer" in the rights transfer status 3114 of the license management data 3110 in accordance with the notification from the portable terminal 1000, but the rights issuing module 3201 of the embodiment 2 differs in that it sets "Awaiting transfer" in the rights transfer status 3114 in accordance with the notification from the terminal management server 4001.

Main data used by the content management system of the embodiment 2, being the main data used by the content management system 100 of the embodiment 1, are the same as the data illustrated in Figs. 5 to 16.

Herein, a description will be given only of a point which differs from the operations of the embodiment 1.

The operations of the content management system 100 of the embodiment 1 are described using Figs. 18 to 22.

Of the operations of the content management system of the embodiment 2, one differing from those of the content management system 100 of the embodiment 1 is the rights data saving and discarding process described using Fig. 19.

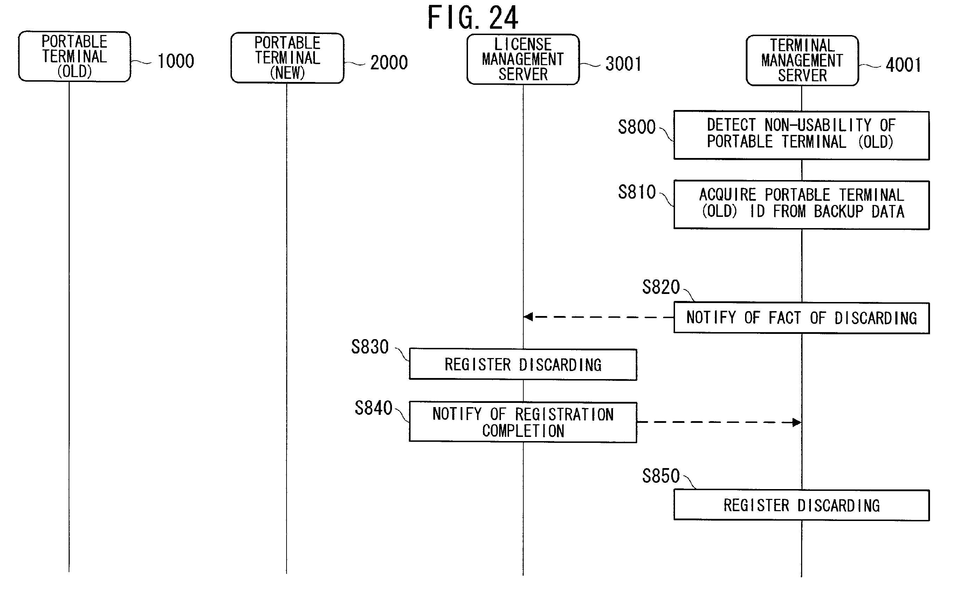

Hereafter, using Fig. 24 in stead of Fig. 19, a description will be given of a rights data saving and discarding process of the embodiment 2.

Firstly, the device change process is performed in the terminal management server 4001.

Specifically, the operator carries out a registration of a beginning of use of the portable terminal 2000, which is the new device, and inputs the device change, specifying the portable terminal 1000, which is the old device, and the portable terminal 2000, which is the new device. Furthermore, the operator inputs the fact that the use of the portable terminal 1000, which is the old device, is finished (step S800).

The terminal management server 4001 which detects the operator's input registers the record of the portable terminal 2000, which is the new device, in the terminal management data 4110 stored in the terminal management data storage 4100. Next, the terminal management server 4001 registers the communication terminal ID of the portable terminal 1000, which is the old device, and the communication terminal ID of the portable terminal 2000, which is the new device, in the terminal change data 4120. Furthermore, the terminal management server 4001 deletes the record of the portable terminal 1000, which is the old device, from the terminal management data 4110.

The terminal management server 4001 which has registered the device change and finish of use in the terminal management data 4110 and terminal change data 4120 passes the communication terminal ID of the portable terminal 1000, of which the use is finished, on to the old terminal ID detection module 4500, and requests a process carried out in the case in which the use of the portable terminal which is the old device is finished.

The old terminal ID detection module 4500 which receives the request detects the DRM terminal ID using the communication terminal ID of the portable terminal which is the old device (step S810).

Herein, a description will be given of a method of detecting the DRM terminal ID of the portable terminal which is the old device.

Firstly, the old terminal ID detection module 4500 refers to, from among the saved data 4210 (refer to Fig. 6) stored in the saved data storage 4200, the saved rights data 4212 of the portable terminal which is the old device. For example, in the event that the communication terminal ID of the portable terminal which is the old device is "Terminal-A", the old terminal ID detection module 4500 refers to the saved rights data 4212 "Rights data saved from Terminal-A" stored corresponding thereto.

The old terminal ID detection module 4500 detects the DRM terminal ID 3214 of the rights data 3210 stored as the saved rights data 4212 as the DRM terminal ID of the portable terminal which is the old device (step S810).

Next, the old terminal ID detection module 4500 notifies the license management server 3001 of the fact that the rights data stored by the portable terminal indicated by the detected DRM terminal ID have been discarded (step S820).

The rights issuing module 3201 of the license management server 3001 which receives the notification makes, of the license management data 3110 stored in the rights data storage 3100, the rights transfer status 4114 of the same DRM terminal ID 3113 as the DRM terminal ID of which notification is received "Awaiting transfer" (step S830), and notifies the terminal management server 4001 of the fact that it has registered the discarding (step S840).

The old terminal ID detection module 4500 of the terminal management server 4001 which receives the notification of the fact of the registration from the license management server 3001 makes the rights transfer status 4114 "Awaiting transfer" in the record in which the portable terminal 1000, which is the old device, is indicated by the communication terminal ID 4111 of the terminal management data 4110 of the terminal management data storage 4100 (step S850).

### Embodiment 3

In the embodiment 1, a description is given of a case in which the device is changed to a portable terminal of the same telecommunications company, but in an embodiment 3, a description will be given of a case in which the device is changed to a portable terminal of a different telecommunications company.

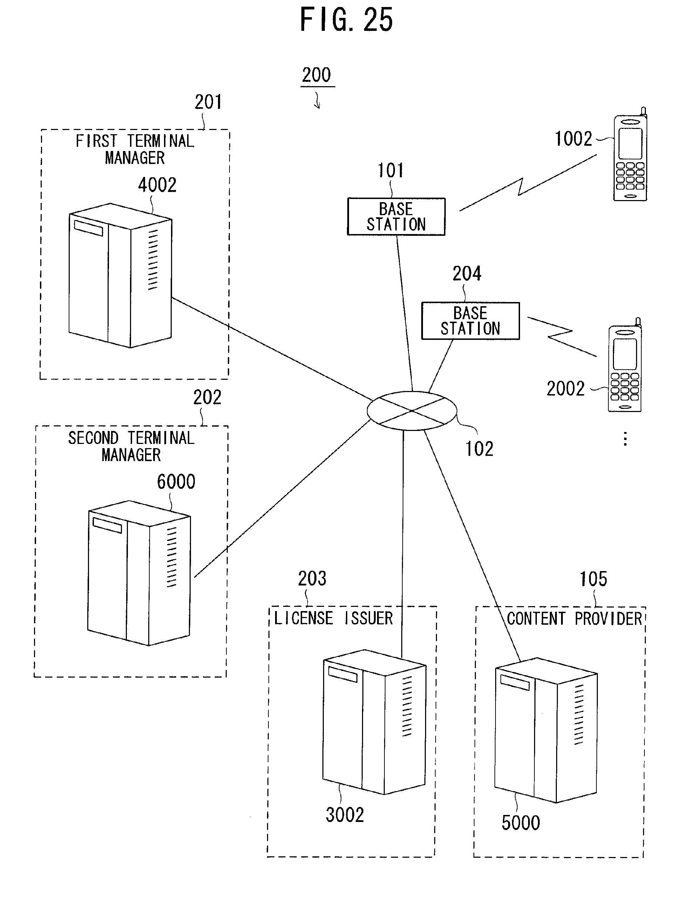

Fig. 25 is a diagram illustrating an example of an overall configuration of a content management system 200 of the embodiment 3.

The content management system 200 includes portable terminals (1002 and 2002), terminal management servers (4002 and 6000), a license management server 3002, and the content management server 5000, which can communicate with each other via base stations (101 and 204) and the network 102.

In the embodiment 3, it is assumed that a first terminal manager 201, which is a mobile telecommunications company or the like, operates the first terminal management server 4002, and that a second terminal manager 202 operates the second terminal management server 6000. It is assumed that the portable terminal 1002 is used under the management of the first terminal manager 201, while the portable terminal 2002 is used under the management of the second terminal manager 202.

Also, it is assumed that the content provider 105 operates the content management server 5000, and a license issuer 203 operates the license management server 3002.

In the embodiment 3, a case is assumed wherein a user of the portable terminal 1002 carries out a change of device from the portable terminal 1002 to the portable terminal 2002.

In this case, basically, the portable terminal 2002, which is the new terminal, becomes able to use content by acquiring transfer certification and having the rights data reissued with the kind of procedure described in the embodiment 1.

However, the portable terminal normally communicates with the terminal management server operated by the terminal manager of current subscribing telecommunication company.

Consequently, the portable terminal 2002, which is the new device, carries out communication with the second terminal management server 6000, and requests the transfer certification from the second terminal management server 6000.

However, as the portable terminal 1002, which is the old terminal, carries out communication with the first terminal management server 4002, information relating to the portable terminal 1002, which is the old terminal, is not recorded at the second terminal management server 6000.

That is, the second terminal management server 6000 from which the transfer certification is requested cannot determine whether or not it is possible to issue the transfer certification. This is because, in order to issue the transfer certification, it is necessary to confirm that the old DRM terminal ID 2413 included in the transfer certification issue request data 2410 transmitted by the portable terminal which is the new device is the DRM terminal ID of the portable terminal which is the old device before the device change.

Consequently, in the event that terminal management servers operated by different terminal managers do not share information, the second terminal management server 6000 cannot issue the transfer certification.

Therein, a description will be given of the content management system 200 which enables the second terminal management server 6000 with which the portable terminal 2002 is in communication to determine whether it may issue the transfer certification, even in the event that the user changes the device from the portable terminal 1002 to the portable terminal 2002.

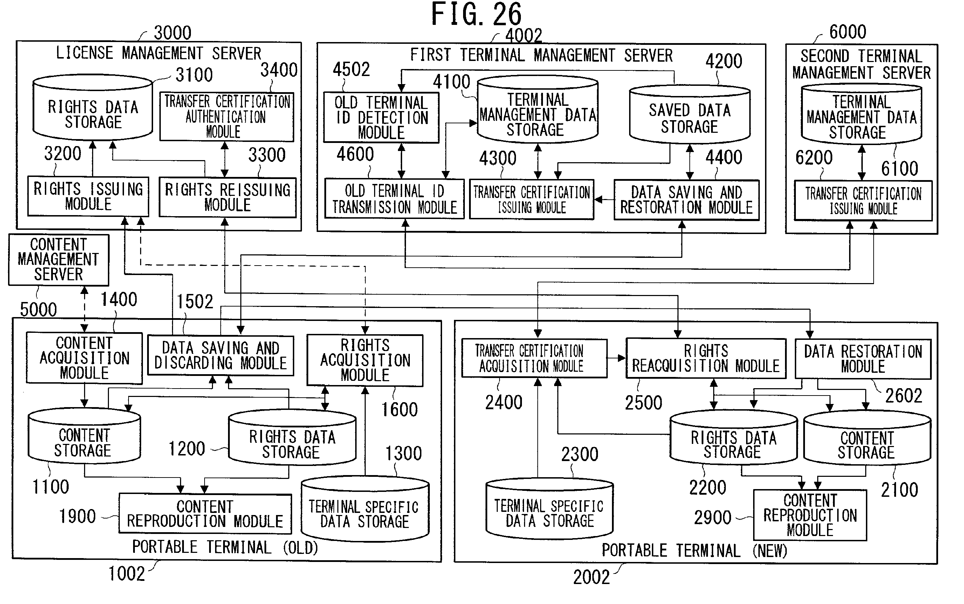

Fig. 26 is a block diagram illustrating an example of a functional configuration of the content management system 200 of the embodiment 3.

Herein, a description will be given only differences from the functional block diagram of the content management system of the embodiment 1 described using Fig. 4.

Firstly, comparing the portable terminal 1002 with the portable terminal 1000 of Fig. 4, the difference is a data saving and discarding module 1502.

The data saving and discarding module 1500 of the portable terminal 1000 of Fig. 4 has a function of saving the stored content management data and rights data at the terminal management server 4000.

The data saving and discarding module 1502 of the portable terminal 1002 of the embodiment 3, in the same way as the data saving and discarding module 1500 of the embodiment 1, has a function of saving the stored content management data and rights data at the first terminal management server 4002. In addition, the data saving and discarding module 1502 has a function of transmitting the stored content management data and rights data to the portable terminal 2002, using infrared communication, or the like.

Next, comparing the portable terminal 2002 with the portable terminal 2000 of Fig. 4, the difference is a data restoration module 2602.

The data restoration module 2600 of the portable terminal 2000 of Fig. 4 has a function of receiving the content management data and rights data from the terminal management server 4000. The data restoration module 2602 of the portable terminal 2002 of the embodiment 3 has a function of receiving the content management data and rights data directly from the portable terminal 1002. The portable terminal 2002 receives the data from the portable terminal 1002 using infrared communication, or the like.

Although it is assumed that the data are transmitted directly from the portable terminal 1002 to the portable terminal 2002 using infrared communication, or the like, as long as it is possible to restore the content management data and rights data to the portable terminal 2002, the method is not an issue.

Next, the first terminal management server 4002 differs in comparison with the terminal management server 4000 of Fig. 4 in that an old terminal ID detection module 4502 and an old terminal ID transmission module 4600 are added.

The old terminal ID detection module 4502 has a function of receiving the communication terminal ID of the portable terminal which is the new device from the old terminal ID transmission module 4600, detecting the DRM terminal ID of the portable terminal which is the old device, and returning the detected DRM terminal ID to the old terminal ID transmission module 4600.

The old terminal ID transmission module 4600 has a function of receiving the communication terminal ID of the portable terminal which is the new device from the second terminal management server 6000, and returning the DRM terminal ID of the old terminal to the second terminal management server 6000. The DRM terminal ID of the old terminal is acquired by requesting it from the old terminal ID detection module 4502.

Next, in the embodiment 3, the second terminal management server 6000 is added.

The second terminal management server 6000, being the server which manages the portable terminal 2002, has the same functions as the first terminal management server 4002. Only a terminal management data storage 6100 and a transfer certification issuing module 6200, which are used in the description in the embodiment 3, are depicted in Fig. 26.

The terminal management data storage 6100 and transfer certification issuing module 6200, basically, have the same functions as the terminal management data storage 4100 and transfer certification issuing module 4300 of the first terminal management server 4002.

That is, the terminal management data storage 6100 has a function of storing terminal management data 6110 and the terminal change data 4120. The terminal management data 6110 are approximately the same as the terminal management data 4110 stored by the terminal management data storage 4100 (refer to Figs. 5A and 5B). A description of the terminal management data 6110 stored by the terminal management data storage 6100 will be given in a "Data" section.

The transfer certification issuing module 6200 has a function of generating, in response to a request from the portable terminal 2002, data proving that the device has been changed from the portable terminal 1002, which is the old device, to the portable terminal 2002, and transmitting them to the portable terminal 2002. In the embodiment 3, the transfer certification issuing module 6200 has a function of asking the first terminal management server 4002 managing the portable terminal 1002, which is the old device, for the DRM terminal ID of the portable terminal 1002, which is the old device.

Main data used by the content management system of the embodiment 3, being the main data used by the content management system of the embodiment 1, are approximately the same as the data illustrated in Figs. 5 to 16, with only the terminal management data 4110 of Fig. 5A being different.

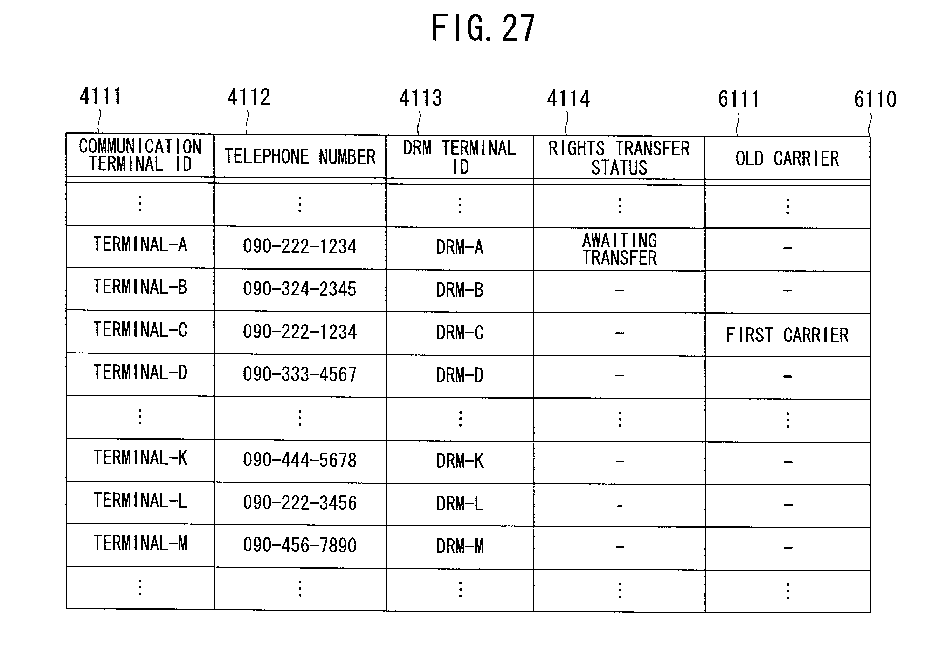

A description will be given, using Fig. 27, of the terminal management data 6110 of the embodiment 3.

The terminal management data 6110 are configured of the communication terminal ID 4111, the telephone number 4112, the DRM terminal ID 4113, the rights transfer status 4114, and an old carrier 6111.

The communication terminal ID 4111, telephone number 4112, DRM terminal ID 4113, and rights transfer status 4114 are the same as the communication terminal ID 4111, and the like, of the terminal management data 4110.

The old carrier 6111 indicates the IP address of the terminal management server operated by the carrier by which the portable terminal which is the old device before the device change has been managed.

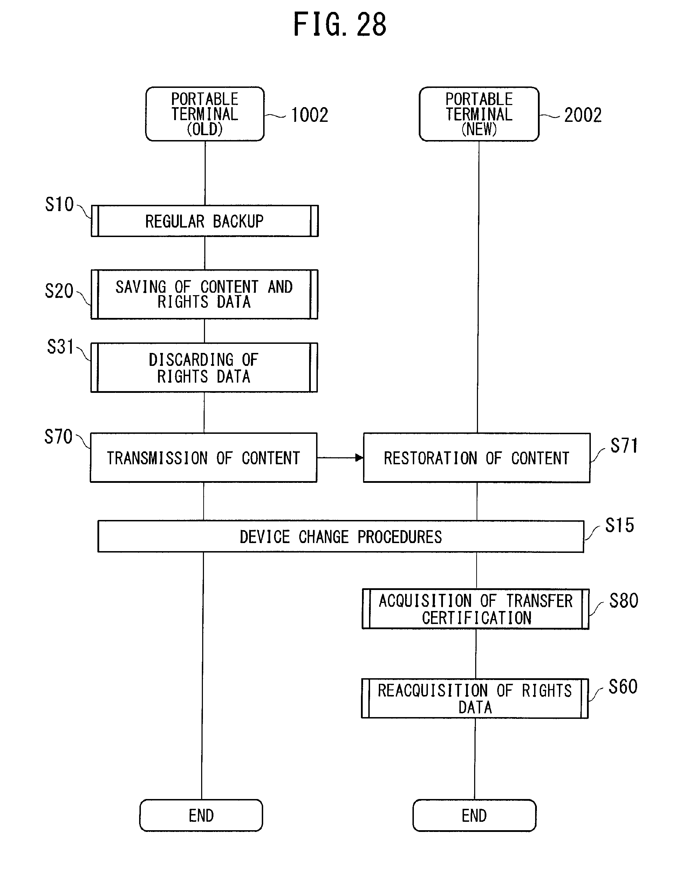

Fig. 28 is a diagram illustrating a flow of a process when changing the portable terminal of the embodiment 3.

Fig. 28 illustrates, in the case in which the device is changed from the portable terminal 1002 to the portable terminal 2002 with the different carrier, the flow of the process until the portable terminal 2002 acquires the rights data.

Herein, a description will be given focusing on points which differ from the flow of the process of the embodiment 1 described using Fig. 17. A process given the same step number as in Fig. 17 is the same as the process in the embodiment 1.

Firstly, it is assumed that the portable terminal 1002 of the embodiment 3 regularly backs up the stored content management data and rights data at the terminal management server 4002 (step S10).

In Fig. 17, at this point, a change of device is carried out from the portable terminal 1002 to the portable terminal 2002, whose terminal manager is different from that of the portable terminal 1002. However, in the embodiment 3, the process of step S45 of Fig. 17, that is, the process of transferring the content management data and rights data, needs to be carried out between the old and new carriers.

Consequently, in the embodiment 3, the process of step S20 of Fig. 17 (steps S320 and S330 of Fig. 19), and the process of step S31, which is one portion of step S30 of Fig. 17 (steps S340 to S410 0 of Fig. 19, although step S380 is the process of discarding the rights data only), are carried out before the device change.

The process of step S20, and the process of step S31, are carried out by a user operation. By these processes being carried out, the fact that the rights data inside the portable terminal 1002 have been securely discarded is reported to the first terminal management server 4002.

Next, the content management data stored in the portable terminal 1002, which is the old device, are forwarded to the portable terminal 2002, which is the new device (steps S70 and S71). It is assumed that the forwarding of the content management data is carried out directly between the portable terminals, using infrared communication, or the like.

Specifically, the user issues an instruction to the portable terminal 1002 to the effect that the content is to be transmitted.

The portable terminal 1002 which detects the instruction from the user to the effect that the content is to be transmitted requests the data saving and discarding module 1502 to transmit the content management data.

The data saving and discarding module 1502 which receives the request retrieves the content management data 1110 (refer to Fig. 9) from the content storage 1100, and transmits them using infrared communication (step S70 of Fig. 28).

Meanwhile, the user, at the same time as issuing the instruction to the portable terminal 1002 to the effect that the content is to be transmitted, issues an instruction to the portable terminal 2002 to the effect that the content is to be received.

The portable terminal 2002 which detects the instruction from the user to the effect that the content is to be received requests the data restoration module 2602 to receive the content management data.

The data restoration module 2602 of the portable terminal 2002 which receives the data stores the received content management data 1110 in the content storage 2100.

Then, the process of changing the device from the portable terminal 1002 to the portable terminal 2002 is carried out (step S15).

Specifically, the communication terminal ID of the portable terminal which is the old device, and the fact that the device has been changed, are input into the first terminal management server 4002 by the operator.

The first terminal management server 4002 which detects the fact that the device change has been performed confirms that the content management data stored by the portable terminal 1002 are saved in the saved data 4210, and that the rights transfer status 4114 of the terminal management data 4111 is "Awaiting transfer".

Meanwhile, the communication terminal ID of the portable terminal 1002, which is the old device, the communication terminal ID of the portable terminal 2002, which is the new device, the fact that the device has been changed, and information which can specify the first terminal management server 4002, are input into the second terminal management server 6000 by the operator (step S15).

The second terminal management server 6000 which detects the device change registers the record of the portable terminal 2002, which is the new device, in the terminal management data 6110 stored in the terminal management data storage 6100. At this time, the information which can specify the first terminal management server 4002 is registered in the old carrier 6111. Specifically, the IP address of the first terminal management server 4002 is set.

Also, the communication terminal ID of the portable terminal 1002, which is the old device, input by the operator is registered in the old communication terminal ID 4121 of the terminal change data 4120, and the communication terminal ID of the portable terminal 2002, which is the new device, is registered in the corresponding new communication terminal ID 4122.

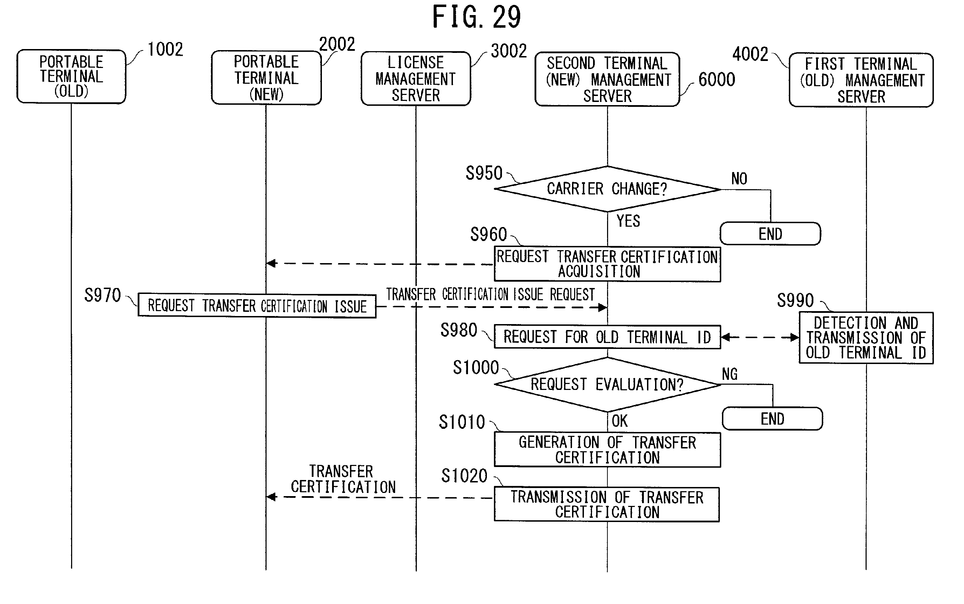

Next, using Fig. 29, a description will be given of the process of the portable terminal 2002 acquiring the transfer certification (step S80 of Fig. 28).

The second terminal management server 6000 which has finished the normal initialization process determines whether the carrier of the portable terminal which has carried out the initialization has been changed from another telecommunications company(step S950).

Specifically, in the event that the carrier name is registered in the old carrier 6111 of the terminal management data 6110, the second terminal management server 6000 determines that the portable terminal is one whose carrier has been changed. Also, in the event that the telecommunications company name is not registered in the old carrier 6111, the second terminal management server 6000 determines that the portable terminal is not one whose carrier has been changed.

In the event that the second terminal management server 6000 determines that the terminal is not one whose carrier has been changed (step S950: No), it finishes the initialization process.

In the event that the second terminal management server 6000 determines that the carrier has been changed (step S950: Yes), it notifies the transfer certification issuing module 6200 of the fact.

The transfer certification issuing module 6200 which receives the notification requests the portable terminal 2002 to acquire the transfer certification (step S960).

The transfer certification acquisition module 2400 of the portable terminal 2002 which receives the request to acquire the transfer certification generates the transfer certification issue request data 2410.

The generation of the transfer certification issue request data 2410 is the same as in step S610 of Fig. 21.

The transfer certification acquisition module 2400 which generates the transfer certification issue request data 2410 transmits the generated transfer certification issue request data 2410 to the second terminal management server 6000 (step S970).

The transfer certification issuing module 6200 of the second terminal management server 6000 which receives the transfer certification issue request data 2410 evaluates the received transfer certification issue request data 2410 (step S1000).

The evaluation, in the same way as in the embodiment 1, is carried out by confirming the following three conditions.

Firstly, the first condition is that the portable terminal indicated by the new communication terminal ID 2411 and new DRM terminal ID 2412 of the received transfer certification issue request data 2410 is the portable terminal which is the new device after the device replacement, the second condition is that the portable terminal indicated by the old DRM terminal ID 2413 is the portable terminal which is the old device before the device replacement, and the third condition is that the rights data, and the like, of the portable terminal indicated by the old DRM terminal ID 2413 have been discarded.

However, the second terminal management server 6000 cannot confirm that the portable terminal indicated by the old DRM terminal ID 2413 of the second condition is the portable terminal which is the old device before the device replacement. This is because the communication terminal ID of the portable terminal which is the old device is stored in the terminal change data 4120, but the DRM terminal ID is not stored.

Therein, the transfer certification issuing module 6200 asks the server of the carrier set in the old carrier 6111 of the terminal management data 6110 for the DRM terminal ID of the portable terminal which is the old device (step S980).

Specifically, the transfer certification issuing module 6200, referring to the terminal change data 4120 stored in the terminal management data storage 6100, retrieves the communication terminal ID of the portable terminal 1002, which is the old device, and asks the server of the old carrier, that is, the first terminal management server 4002, for the DRM terminal ID of this communication terminal ID.

The old terminal ID transmission module 4600 of the first terminal management server 4002 which receives the inquiry passes the received communication terminal ID of the portable terminal 1002, which is the old device, on to the old terminal ID detection module 4502, asking for the DRM terminal ID.

The old terminal ID detection module 4502 which receives the inquiry refers to, from among the saved data 4210, the saved rights data 4212 saved from the portable terminal indicated by the received communication terminal ID.

The old terminal ID detection module 4502 retrieves the DRM terminal ID 3214 from the rights data 3210 included in the saved rights data 4212, and returns it to the old terminal ID transmission module 4600.

The old terminal ID transmission module 4600 which receives the DRM terminal ID of the portable terminal 1002, which is the old device, notifies the second terminal management server 6000 of the received DRM terminal ID (step S990).

The transfer certification issuing module 6200 of the second terminal management server 6000 which receives the notification compares the received DRM terminal ID and the old DRM terminal ID 2413 of the transfer certification issue request data 2410.

In the event that these are the same, it is possible to confirm that the portable terminal indicated by the old DRM terminal ID 2413 is the portable terminal which is the old device before the device replacement, which is the second condition of the evaluation.

In the event that the other two conditions are granted (step S1000: OK), the transfer certification issuing module 6200 generates the transfer certification data 4310 (step S1010), while in the event that even one condition is not granted (step S1000: NG), the transfer certification issuing module 6200 does not carry out the issue of the transfer certification.

The generation of the transfer certification data 4310 is the same as in step S630 of Fig. 21.

The transfer certification issuing module 6200 which has generated the transfer certification data 4310 transmits the generated transfer certification data 4310 to the portable terminal 2002 (step S1020).

The transfer certification acquisition module 2400 of the portable terminal 2002 receives the transfer certification data 4310.

### Embodiment 4

In embodiment 1, when transmitting the transfer certification data 4310 to the portable terminal 2000 from the terminal management server 4000, they are transmitted as so-called raw data, but in embodiment 4 there is a difference in that the transfer certification data 4310 are transmitted encrypted. The encryption is carried out with a public key saved on an SIM card. By transferring the SIM card from the portable terminal which is the old device to the terminal which is the new device, only the new terminal can perform decryption. Consequently, it is possible to pass the transfer certification more safely on to the portable terminal which is the new device.

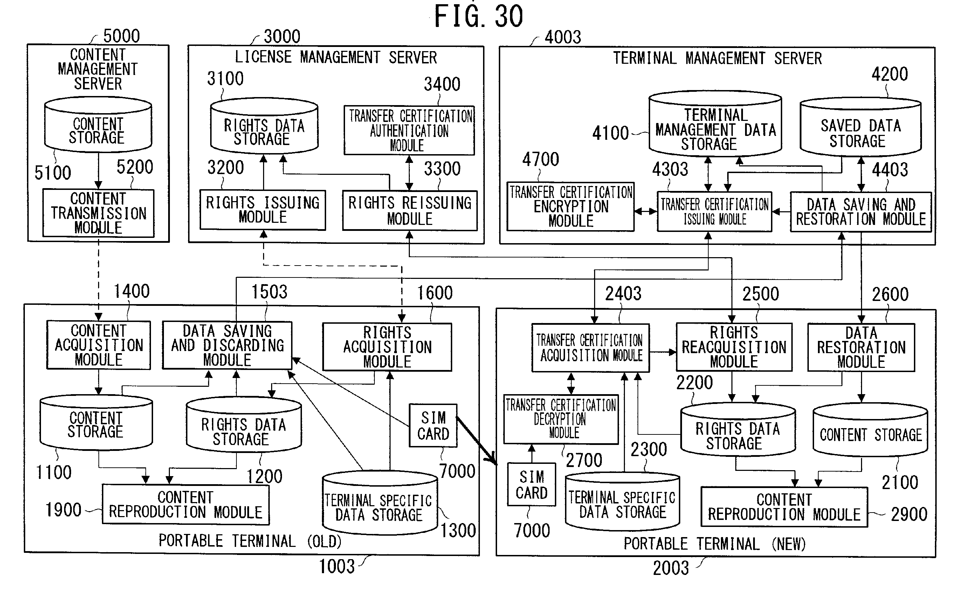

Fig. 30 is a block diagram illustrating an example of a functional configuration of a content management system of the embodiment 4.

Herein, a description will be given only of differences from the functional block diagram of the content management system 100 of the embodiment 1 described using Fig. 4.

The differences are a terminal management server 4003 and portable terminals (1003 and 2003).

Firstly, the terminal management server 4003 differs in comparison with the terminal management server 4000 of Fig. 4 in that a data saving and restoration module 4403 and transfer certification issuing module 4303 are different, and a transfer certification encryption module 4700 is added.

The data saving and restoration module 4403, in addition to the function of the data saving and restoration module 4400 of Fig. 4, has a function of receiving a public key from the portable terminal 1003, and registering it in terminal management data 4130.

The transfer certification issuing module 4303 differs from the transfer certification issuing module 4300 of Fig. 4 in that it transmits the generated transfer certification data to the portable terminal 2003 encrypted. The transfer certification issuing module 4300 of Fig. 4 transmits the generated transfer certification data as they are.

Also, the transfer certification encryption module 4700 has a function of receiving a request from the transfer certification issuing module 4300, and encrypting the transfer certification data.

The portable terminals (1003 and 2003) differ in comparison with the portable terminals (1000 and 2000) of Fig. 4 in that it is possible to load an SIM card 7000.

Also, a data saving and discarding module 1503 of the portable terminal 1003, in addition to the functions of the data saving and discarding module 1500 of Fig. 4, has a function of transmitting the public key on the SIM card when receiving a request to discard the rights data.

The portable terminal 2003 differs in comparison with the portable terminal 2000 of Fig. 4 in that a transfer certification decryption module 2700 is added. The transfer certification decryption module 2700 has a function of decrypting the encrypted transfer certification data using a decryption key on the SIM card.

Main data used by the content management system of the embodiment 4, being the main data used by the content management system of the embodiment 1, are approximately the same as the data illustrated in Figs. 5 to 16, with only the terminal management data 4110 of Fig. 5A being different.

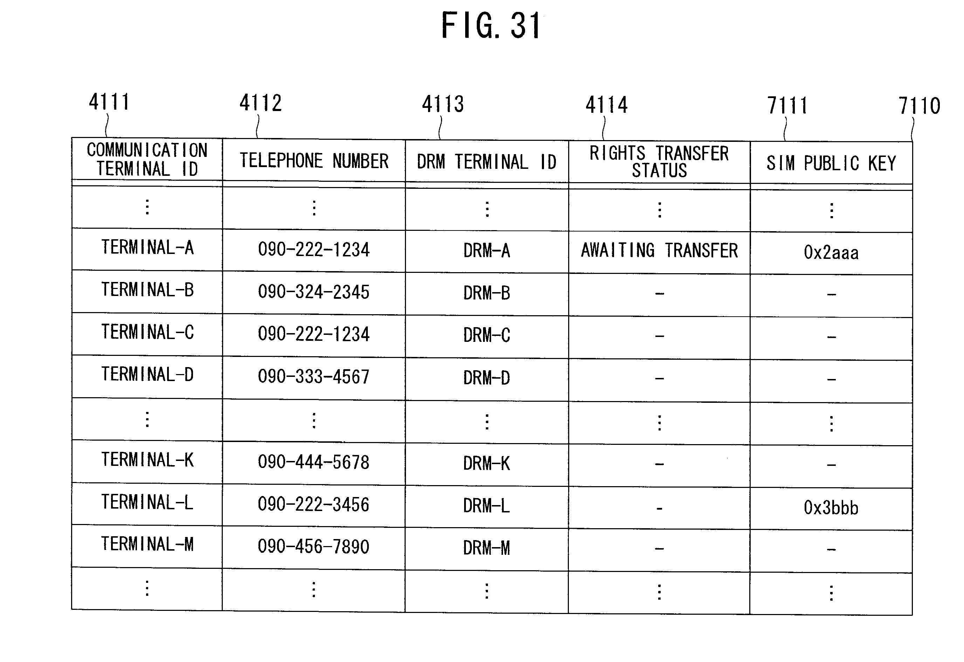

A description will be given, using Fig. 31, of terminal management data 7110 of the embodiment 4.

The terminal management data 7110 are configured of the communication terminal ID 4111, the telephone number 4112, the DRM terminal ID 4113, the rights transfer status 4114, and an SIM public key 7111.

The communication terminal ID 4111, telephone number 4112, DRM terminal ID 4113, and rights transfer status 4114 are the same as the communication terminal ID 4111, and the like, of the terminal management data 4110.

The SIM public key 7111 indicates the public key stored on the SIM card of the portable terminal which is the old device before the device change.

Herein, a description will be given only of points which differ from the operations of the embodiment 1.

The operations of the content management system of the embodiment 1 are described using Figs. 17 to 22.

The operations differing from those of the content management system of the embodiment 4 are the rights data saving and discarding process described using Fig. 19, the transfer certification acquisition process described using Fig. 21, and the rights data reacquisition process described using Fig. 22.

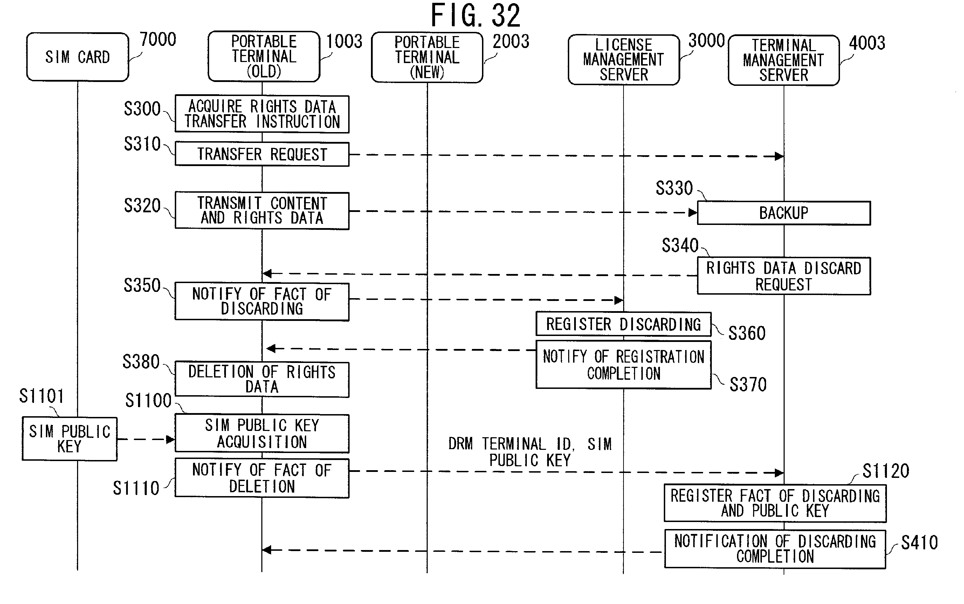

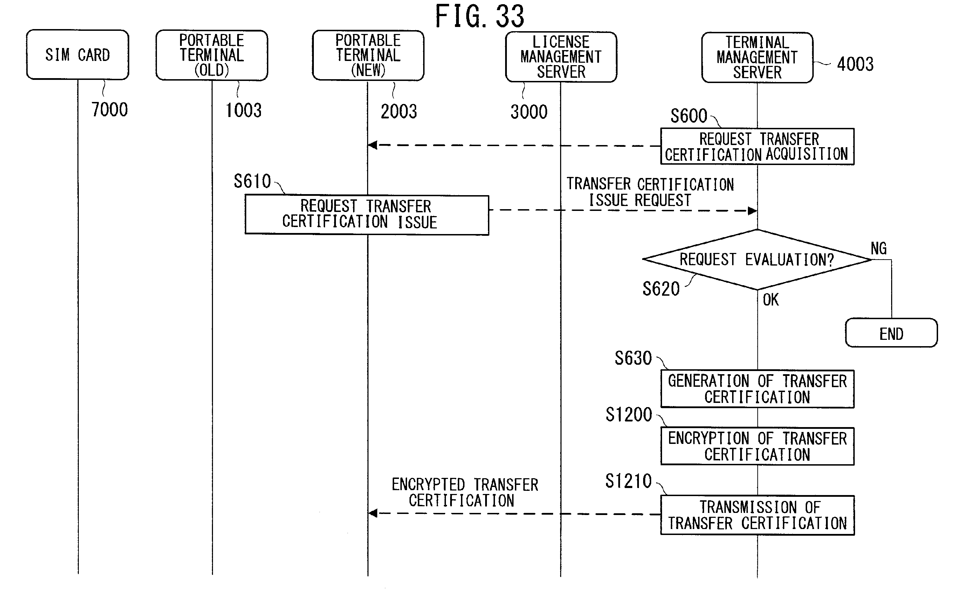

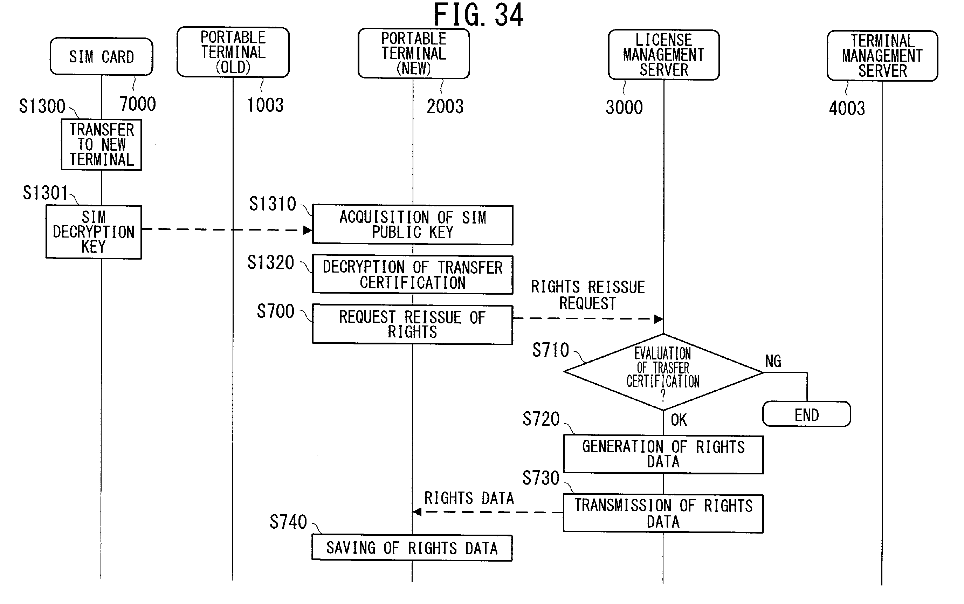

Hereafter, a rights data saving and discarding process of the embodiment 4 will be described using Fig. 32, and a transfer certification acquisition process of the embodiment 4 will be described using Fig. 33. Also, a rights data reacquisition process of the embodiment 4 will be described using Fig. 34. A description will be given only of differing points of each process.

First, using Fig. 32, a description will be given of the rights data saving and discarding process of the embodiment 4.

The process from step S300 to step S380 is the same as the process in Fig. 19.

In step S390 of Fig. 19, the data saving and discarding module 1500 only notifies of the fact that it has deleted the data.

Meanwhile, the data saving and discarding module 1503 of the embodiment 4, along with the notification, transmits the SIM public key retrieved from the SIM card 7000 (steps S1101 and S1100), and the DRM terminal ID 1312 of the terminal specific data 1310 stored in the terminal specific data storage 1300, to the terminal management server 4003.

The data saving and restoration module 4403 which receives the fact of the deletion, the SIM public key, and the DRM terminal ID sets the received SIM public key in the SIM public key 7111 correlated to the DRM terminal ID 4113 of the terminal management data 7110 which is the received DRM terminal ID.

Next, using Fig. 33, a description will be given of the transfer certification acquisition process of the embodiment 4.

The process from step S600 to step S630 is the same as the process in Fig. 21.

In step S640 of Fig. 21, the transfer certification issuing module 4300 only transmits the transfer certification data.

Meanwhile, the transfer certification issuing module 4303 of the embodiment 4 encrypts the generated transfer certification data.

Specifically, the transfer certification issuing module 4303 passes the generated transfer certification data, and the SIM public key 7111 of the portable terminal 2003, on to the transfer certification encryption module 4700, and requests an encryption of the transfer certification data.

The transfer certification encryption module 4700 which receives the request returns the received transfer certification data, encrypted with the received public key 7111, to the transfer certification issuing module 4303.

The transfer certification issuing module 4303 which receives the encrypted transfer certification data transmits the encrypted transfer certification data to the portable terminal 2003.

Next, using Fig. 34, a description will be given of the rights data reacquisition process of embodiment 4.

The process from step S700 onward is the same as the process in Fig. 22.

The difference is in that, as the acquired transfer certification is encrypted, the rights data reissue request is carried out with the decrypted transfer certification data attached.

Firstly, the SIM card is transferred from the portable terminal 1003, which is the old device, to the portable terminal 2003, which is the new device (step S1300).

The transfer certification acquisition module 2403 passes the acquired encrypted transfer certification data on to the transfer certification decryption module 2700, and requests a decryption. The transfer certification decryption module 2700 which receives the request retrieves the SIM decryption key from the SIM card 7000 (steps S1301 and S1310), decrypts the encrypted transfer certification, and returns it to the transfer certification acquisition module 2403 (step S1320).

Heretofore, a description has been given of embodiments of the invention but, the invention not being limited to the heretofore described inventions, it is also acceptable to arrange as follows.

1. In the embodiments, the content and rights data are transferred from the portable terminal 1000 to the terminal 2000 via the terminal management server, but it is also possible that only rights data are transferred. This is because, the content being encrypted, it cannot be used without the rights data owned by the device.

2. In the embodiments, a description is given with a device replacement of a portable terminal such as a mobile telephone as an example, but the invention is not limited to the device replacement of a portable terminal. For example, it is also acceptable that it is an installation type of content reproduction apparatus, or the like, in which case there is a need for a server, equivalent to the terminal management server, which manages the device replacement.

3. In the content management systems, it is acceptable that all or one portion of each component of Fig. 4, and the like, is realized by an integrated circuit of one chip or a plurality of chips.

4. In the content management systems, it is acceptable that all or one portion of each component of Fig. 4, and the like, is realized by a computer program, and it is also acceptable that it is implemented in any other form.

In the case of a computer program, it is acceptable to adopt a form whereby a computer is caused to read and execute a program written onto any kind of recording medium, such as a memory card or CD-ROM, and it is also acceptable to adopt a form whereby the program is downloaded via a network, and executed.

In the content management systems with the heretofore described configurations, in the event of carrying out a device change, as the communication terminal after the device change acquires the transfer certification from the terminal management server, and can acquire the rights information from the rights information management server provided that the transfer certification is positively authenticated, it is possible to continue to use the content used by the communication terminal before the device change.

That is, the rights information management server cannot determine whether or not the communication terminal which has requested the rights information is the communication terminal after the device change. Consequently, provided that there is transfer certification issued by the terminal management server, which is aware of the device change, the rights information management server issues the rights information.

The terminal management server transmits the rights information stored by the communication terminal before the device change to the communication terminal after the device change. The communication terminal after the device change obtains the terminal ID of the communication terminal before the device change from the rights information, and transmits it along with its own terminal ID to the terminal management server. The terminal management server, by receiving the terminal ID of the terminal itself, and the information included in the rights information, from the communication terminal which is the one to which the terminal management server itself has transmitted the rights information, can determine that it is the communication terminal after the device change, meaning that it can transmit the transfer certification.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on computer-readable media comprising computer-readable recording media. The program/software implementing the embodiments may also be transmitted over transmission communication media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW. An example of communication media includes a carrier-wave signal.

Further, according to an aspect of the embodiments, any combinations of the described features, functions and/or operations can be provided.

The many features and advantages of the embodiments are apparent from the detailed specification and, thus, it is intended by the appended claims to cover all such features and advantages of the embodiments that fall within the scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

## Claims

1. A content management system for carrying out a process for allowing content data for reproducing content to be used in a second communication terminal in place of a first communication terminal, the content management system comprising:
an authentication unit that is arranged to authenticate that the second communication terminal is a takeover terminal, which is a communication terminal that takes over rights to use the content from the first communication terminal; and
a rights information transmission unit that, when it is authenticated that the second communication terminal is the takeover terminal, is arranged to transmit second rights information that is necessary in order to use the content data, and which is valid only for the second communication terminal, to the second communication terminal.

2. The content management system according to claim 1, further comprising:
a deletion confirmation unit that is arranged to confirm that first rights information that is necessary in order to use the content data, and which is valid only for the first communication terminal, has been deleted from the first communication terminal,
wherein the rights information transmission unit, when it is authenticated that the second communication terminal is the takeover terminal and only when it is confirmed that the first rights information has been deleted, is arranged to transmit the second rights information.

3. The content management system according to claim 1 or 2, further comprising:
a reception unit that is arranged to receive two items of ID from the second communication terminal,
wherein the authentication unit, in the event that one of the two items of ID is an ID of the first communication terminal and the other is an ID of the second communication terminal, is arranged to authenticate that the second communication terminal is the takeover terminal.

4. The content management system according to any of claims 1 to 3,
wherein the content data are encrypted,
wherein the first rights information is such that a decryption key for decrypting the content data is encrypted with a first public key for the first communication terminal, and
wherein the second rights information is such that the decryption key is encrypted with a second public key for the second communication terminal.

5. A communication terminal that has a function of reproducing content, the communication terminal comprising:
an acknowledgement acquisition unit that is arranged to receive acknowledgement from a terminal management server that the communication terminal itself will take over rights to use the content from another communication terminal;
a rights transfer request unit that, when receiving the acknowledgement, is arranged to request a transfer of the rights by transmitting a first terminal ID specifying the other communication terminal, and a second terminal ID specifying the communication terminal itself, to a rights management server managing the rights; and
a rights information reception unit that is arranged to receive rights information that is necessary in order to use the content data, and which is valid only for the communication terminal.

6. A content management method using a computer that allows content data for reproducing content to be used in a second communication terminal in place of a first communication terminal, the method comprising:
authenticating that the second communication terminal is a takeover terminal, which is a communication terminal that takes over rights to use the content from the first communication terminal; and
transmitting, when it is authenticated that the second communication terminal is the takeover terminal, second rights information that is necessary in order to use the content data, and which is valid only for the second communication terminal, to the second communication terminal.

7. A content management method using a computer that allows content that a first communication terminal has rights to use to be used in a second communication terminal,
receiving acknowledgement from a terminal management server that the second communication terminal will take over rights to use the content from the first communication terminal by the second communication terminal;
requesting, when receiving the acknowledgement, a transfer of the rights by transmitting a first terminal ID specifying the first communication terminal and a second terminal ID specifying the second communication terminal, to a rights management server managing the rights; and
receiving rights information that is necessary in order to use the content data, and which is valid only for the communication terminal.

8. A program for allowing content that a first communication terminal has rights to use to be used in a second communication terminal, the program when executed by a computer causing the computer to perform a method comprising:
receiving acknowledgement from a terminal management server that the second communication terminal will take over rights to use the content from the first communication terminal by the second communication terminal;
requesting, when receiving the acknowledgement, a transfer of the rights by transmitting first terminal ID specifying the first communication terminal and second terminal ID specifying the second communication terminal, to a rights management server managing the rights; and
receiving rights information that is necessary in order to use the content data, and which is valid only for the communication terminal.
